# EUROPEAN PATENT SPECIFICATION

(11) **EP 2 043 185 B1**
(45) Date of publication and mention of the grant of the patent: **04.09.2013**
(21) Application number: 07790519.8
(22) Date of filing: 09.07.2007
(51) Int. Cl.: H01M 8/04, B60L 11/18, H01M 8/00, H01M 8/22

(54) **HYDRAZINE SUPPLY DEVICE, FUEL CELL SYSTEM UTILIZING THE SAME, VEHICLE CARRYING THE FUEL CELL SYSTEM, AND METHOD OF SUPPLYING HYDRAZINE**
HYDRAZINVERSORGUNGSEINRICHTUNG, BRENNSTOFFZELLENSYSTEM DAMIT, DAS BRENNSTOFFZELLENSYSTEM TRAGENDES FAHRZEUG UND VERFAHREN ZUM ZUFÜHREN VON HYDARZIN
DISPOSITIF D'ALIMENTATION EN HYDRAZINE, SYSTÈME DE PILES À COMBUSTIBLE L'UTILISANT, VÉHICULE PORTANT LE SYSTÈME DE PILES À COMBUSTIBLE ET PROCÉDÉ D'ALIMENTATION EN HYDRAZINE

(30) Priority: 14.07.2006 JP 2006194454
(43) Date of publication of application: 01.04.2009
(73) Proprietor: Otsuka Chemical Co., Ltd., Osaka-shi, Osaka 540-0021 (JP); Daihatsu Motor Co., Ltd., Ikeda-shi, Osaka 563-8651 (JP)
(72) Inventor: TANIGUCHI, Masatoshi, Osaka-shi, Osaka 540-0021 (JP); OKA, Akinori, Tokushima-shi, Tokushima 771-0193 (JP); KITAJIMA, Takashi, Tokushima-shi, Tokushima 771-0193 (JP); SONOGI, Ken, Tokushima-shi, Tokushima 771-0193 (JP); TANAKA, Hirohisa, Gamo-gun, Shiga 520-2593 (JP); YAMADA, Koji, Gamo-gun, Shiga 520-2593 (JP); ASAZAWA, Koichiro, Gamo-gun, Shiga 520-2593 (JP)
(74) Representative: Schwabe - Sandmair - Marx
(86) International application number: PCT/JP2007/063698
(87) International publication number: WO 2008/007651

(56) References cited:
- EP-A2- 0 092 802
- JP-A- 02 234 358
- JP-A- 58 186 170
- JP-A- 2004 127 659
- JP-A- 2005 203 335
- JP-A- 2006 079 838
- JP-A- 2006 156 086
- US-A1- 2006 063 058
- KOICHIRO ASAZAWA ET AL: "A Platinum-Free Zero-Carbon-Emission Easy Fuelling Direct Hydrazine Fuel Cell for Vehicles", ANGEWANDTE CHEMIE INTERNATIONAL EDITION, vol. 46, no. 42, 22 October 2007 (2007-10-22), pages 8024-8027, XP55014583, ISSN: 1433-7851, DOI: 10.1002/anie.200701334

## Description

### TECHNICAL FIELD

The present invention relates to a hydrazine supply device, a fuel cell system utilizing the hydrazine supply device, a vehicle carrying the fuel cell system, and a method of supplying hydrazine. More particularly, the present invention relates to a hydrazine supply device, a fuel cell system utilizing the hydrazine supply device, a vehicle carrying the fuel cell system, and a method of supplying hydrazine, which are used in various industrial fields requiring hydrazine.

### BACKGROUND ART

Hydrazine has been used in a wide range of industrial fields for applications such as raw materials for the production of plastic foaming agents, boiler compounds, reducing agents, polymerization catalysts and various derivatives, reagents, agricultural chemicals, water treatment chemicals, and rocket fuels and the use of hydrazine in various industrial fields is currently under consideration.

For example, the use of hydrazine as a fuel for fuel cells has been proposed (cf. for example, Patent Document 1).

The fuel cell described in Patent Document 1 does not generate carbon dioxide (CO₂) along with the electric power generation reaction, thereby achieving reduction of burdens on the environment. Therefore, practical use of the fuel cell has been required.

However, when hydrazine is heated, exposed to flame, or allowed to react with oxidizing agents, it may pose explosion hazard. Moreover, hydrazine vigorously reacts with metals, metal oxides, or porous substances, which may also cause a fire or an explosion. Further, hydrazine is strongly alkaline and irritative to skin and membrane. Therefore, hydrazine should always be handled with extreme caution.

It has been proposed, for example, to store hydrazine by enclosing a hydrazine standard solution in an ampule less transparent to ultraviolet light (cf. for example, Patent Document 2).
Patent Document 1: International Patent Publication No.WO2003/056649
Patent Document 2: Japanese Unexamined Patent Publication No. 9-21731

US 2006/0063058 A1 discloses a fuel supplying system, comprising a container having therein a liquid fuel and a carrier for fixing the liquid fuel.

EP 0 092 802 A2 discloses a fuel element for a liquid fuel cell, the liquid fuel is rendered to assume a non-fluidized state by physical means, and is returned back to the initial liquid fuel at any time by physical or chemical means.

### DISCLOSURE OF THE INVENTION

### PROBLEMS TO BE SOLVED

However, the method for storing the hydrazine standard solution described in Patent Document 2 is intended to store hydrazine standard solutions used for test and analysis, and enclosing of hydrazine in an ampule is completely unsuitable for applications in other industrial fields such as storage as an industrial source.

The present invention has been achieved under such circumstances. An object of the present invention is to provide a hydrazine supply device capable of stably storing and supplying hydrazine.

Another object of the present invention is to provide a fuel cell system capable of safely using hydrazine as a fuel.

Still another object of the present invention is to provide a vehicle capable of safely using hydrazine as a fuel and of reducing burdens on the environment.

Still another object of the present invention is to provide a hydrazine supply method capable of stably storing and supplying hydrazine.

### MEANS FOR SOLVING THE PROBLEM

To achieve the above object, the hydrazine supply device of the present invention includes a fixing bath for fixing hydrazine, and a releasing unit for releasing the hydrazine fixed in the fixing bath.

It is preferable that the hydrazine supply device of the present invention further includes a material supply unit for supplying hydrazine to the fixing bath.

In the hydrazine supply device of the present invention, it is preferable that the fixing bath includes a polymer having a hydrazine-fixing group that releasably fixes hydrazine.

In the hydrazine supply device of the present invention, the fixing bath includes a polymer having a hydrazine-releasable group capable of releasing hydrazine.

The fuel cell system of the present invention includes the hydrazine supply device mentioned above, and a fuel cell using hydrazine supplied from the hydrazine supply device as a fuel.

It is preferable that the fuel cell system is mountable on a vehicle.

The vehicle of the present invention is mounted with the fuel cell system.

The hydrazine supply method of the present invention includes the steps of a fixation step for fixing hydrazine; and a supply step for releasing the hydrazine fixed in the fixation step and then supplying the hydrazine.

It is preferable that the hydrazine supply method of the present invention further includes a material supply step for supplying hydrazine for fixation.

### EFFECT OF THE INVENTION

According to the hydrazine supply device and the hydrazine supply method of the present invention, hydrazine can be stably stored and supplied. Therefore, they can be widely used in various industrial fields requiring hydrazine. Further, according to the fuel cell system of the present invention and the vehicle carrying such system, hydrazine can be safely used as a fuel. Therefore, they can be widely used in various industrial fields requiring the fuel cell system using hydrazine as a fuel. The hydrazine used as a fuel does not generate carbon dioxide (CO₂) along with electric power generation, thereby achieving reduction of burdens on the environment.

### BRIEF DESCRIPTION OF THE DRAWINGS

FIG. 1 is a schematic configuration diagram showing a hydrazine supply device according to one embodiment of the present invention;
FIG. 2 is a schematic configuration diagram showing an on-vehicle fuel cell system according to one embodiment of the fuel cell system of the present invention,
   (a) showing the step of fixing hydrazine, and
   (b) showing the step of supplying hydrazine;
FIG. 3 is a diagram showing a variation of fuel cell system 10; and
FIG. 4 is a graph showing the result of measuring activity of a fuel-side electrode.

### EMBODIMENT OF THE INVENTION

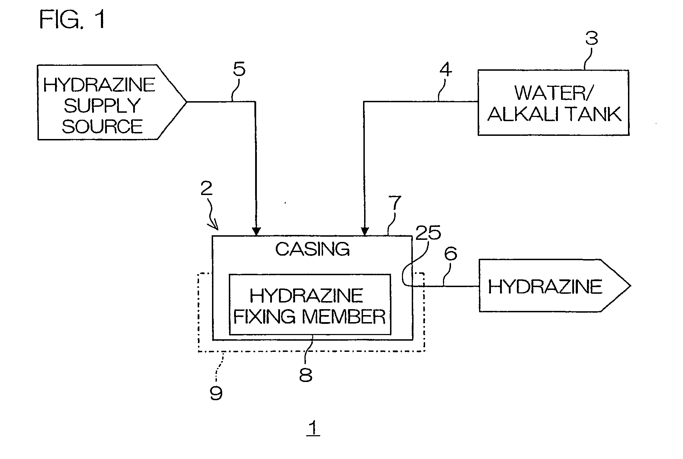

FIG. 1 is a schematic configuration diagram showing a hydrazine supply device according to one embodiment of the present invention. In the following description, hydrazine refers to both hydrazine monohydrate (hydrazine hydrate) and anhydrous hydrazine, unless otherwise specified.

In FIG. 1, hydrazine supply device 1 is a device capable of storing and supplying hydrazine, and includes a hydrazine fixing bath 2 as a fixing bath, a water/alkali tank 3 as a releasing unit, a water/alkali supply line 4, a material supply line 5 as a material supply unit, and a hydrazine supply line 6.

Hydrazine fixing bath 2 includes a casing 7 and a hydrazine fixing member 8 held in casing 7.

Casing 7 is a container for storing hydrazine, and composed of a known material which is chemically stable to hydrazine, such as a stainless steel plate, polyethylene, polypropylene, and polytetrafluoroethylene (PTFE).

Casing 7 is connected with the downstream end portion of material supply line 5 with its upstream end connected to the hydrazine supply source.

Material supply line 5 is provided with an open/close valve, which is not shown, and the opening of the open/close valve allows hydrazine to be supplied from the hydrazine supply source into casing 7 through material supply line 5.

Casing 7 is also connected with the downstream end portion of water/alkali supply line 4 with its upstream end connected to water/alkali tank 3.

Water/alkali tank 3 is a container for storing water or an alkaline aqueous solution (e.g., an aqueous KOH solution, an aqueous NaOH solution, etc.), and composed of a known material which is chemically stable to water or an alkaline aqueous solution, such as a stainless steel plate, polyethylene, polypropylene, and polytetrafluoroethylene (PTFE).

Water/alkali supply line 4 is provided with an open/close valve, which is not shown, and the opening of the open/close valve allows water or the alkaline aqueous solution stored in water/alkali tank 3 to be supplied into casing 7 through water/alkali supply line 4.

Casing 7 also includes a stirrer, which is not shown, so that the water or the alkaline aqueous solution supplied in casing 7 can be properly stirred.

Casing 7 is further connected with hydrazine supply line 6.

Hydrazine supply line 6 is provided with an open/close valve, which is not shown, and the opening of the open/close valve allows the hydrazine released from hydrazine fixing member 8 in casing 7 to be supplied to a supply destination requiring hydrazine, such as a fuel cell using hydrazine as a fuel, through hydrazine supply line 6.

The connecting portion between casing 7 and hydrazine supply line 6 is provided with a filter (membrane) 25.

Filter 25 is not limited as long as it is a membrane (e.g., known molecular sieve membranes such as ultrafiltration membrane, etc.) capable of separating hydrazine from hydrazine fixing member 8 according to the size of their molecules or a filter capable of capturing impurities or degraded resins in suspension in casing 7. Even if a water soluble or an alkali soluble substance is used as hydrazine fixing member 8, filter 25 can separate hydrazine fixing member 8 that is not particularly required at the supply destination, so that unnecessary hydrazine fixing member 8 can be prevented from flowing out into hydrazine supply line 6. This can also prevent impurities or the like in casing 7 from flowing out.

If necessary, a heater 9 capable of warming casing 7 is provided so as to cover the lower portion of casing 7.

Hydrazine fixing member 8 is a synthetic resin (synthetic polymer) or a natural product that is held in casing 7 and capable of fixing and releasing hydrazine, and has, for example, a hydrazine-releasable group capable of releasing hydrazine.

In the present invention, the hydrazine-releasable group is not particularly limited as long as it releasably contains hydrazine, and examples thereof include hydrazone group (C=N-NH₂), hydrazide group (-CONH-NH₂), hydrazino group (C-NH-NH₂), and azine group (-C=N-N=C-).

The hydrazine-releasable group is not particularly limited thereto, and is formed, for example, by fixing hydrazine to a hydrazine-fixing group which releasably fixes hydrazine.

The hydrazine-fixing group is not particularly limited as long as it can fix hydrazine, and examples thereof include ketone group, formyl group, acetal group, halogenomethyl group, halogenoalkyl group, amide group, ester group, sulfonyl chloride group, amidino group, and quaternary ammonium group.

The hydrazine-releasable group can be formed by adding, for example, hydrazine hydrate to the hydrazine-fixing group and stirring the mixture with the hydrazine hydrate dispersed or dissolved in a solvent. Specifically, hydrazine fixing member 8 (hydrazine storage resin) having a hydrazine-releasable group can be obtained by adding hydrazine to the synthetic resin (hydrazine fixing resin) having a hydrazine-fixing group, and stirring the mixture.

The hydrazine-fixing resin which constitutes a hydrazine storage resin is not particularly limited as long as the above-mentioned hydrazine-fixing group is introduced thereinto, and examples thereof include those having a hydrazine-fixing group initially introduced in a synthetic resin by synthesizing a homopolymer or a copolymer containing a monomer having the hydrazine-fixing group (a hydrazine fixing group-containing monomer), or those having a hydrazine-fixing group introduced later in the existing synthetic resin by subjecting to post-treatment. Such hydrazine storage resin has a hydrazine-releasable group introduced in the main chain or a side chain branched from the main chain.

Examples of the hydrazine-fixing resin having a hydrazine-fixing group initially introduced in the synthetic resin (the former resin) include polyketone resin, polyether ketone resin, polyether ether ketone resin, polythioether ketone, and resin having a carbonyl group, a formyl group, a chloromethyl group, a halogenomethyl group, an amide group, and an ester group in the main chain structure when a cyclic alkyl, an aromatic, or a heterocyclic group constitutes the main chain.

Moreover, examples of the former resin include hydrocarbon (carbon-carbon bond) polymers (polyolefine (polyethylene, polypropylene, etc.), polystyrene, polyacrylamide, polyvinyl chloride, polyvinyl acetate, acrylic resin, ABS resin, and ionomer) in the main chain, obtained by radical homopolymerization or radical copolymerization of a hydrazine fixing group-containing vinyl monomer (e.g., acrolein, methyl vinyl ketone, ethyl vinyl ketone, hexyl vinyl ketone, p-acetyl alkyleneoxy styrene, acrylamide, acrylate, methacrylate, p-sulfonated styrene, p-chloromethylated styrene, p-alkyloxycarbonyl styrene, etc.).

Further, examples of the former resin also include polyester polymers, polyurethane polymers, polyamide polymers, polyamidoimide polymers, and polyimide polymers in the main chain, obtained by condensation polymerization, polycondensation, polyaddition, or addition condensation of a hydrazine fixing group-containing compound having a functional group (e.g., hydrazine fixing group-containing polyhydric alcohols such as acetylethyl ethylene glycol, acetylethyl ethylene diamine, acetylethyl ethylene dicarboxylic acid, acetylethyl ethylene dichloride, etc.) and a reactive functional group-containing compound having a reactive functional group capable of reacting with the functional group.

Examples of the hydrazine-fixing resin having a hydrazine-fixing group introduced later in the existing synthetic resin (the latter resin) include polymers obtained by introducing a hydrazine-fixing group such as a ketone group, a halogenomethyl group, a haloalkyl group, a formyl group, or an ester group into an aromatic ring, a fused aromatic ring, a heterocyclic ring, or an aromatic ring fused with a heterocyclic ring, among those having the aromatic ring (e. g. , polyphenylene oxide, polyphenylene sulfide, polysulfone, polyethersulfone, polyether ketone, polyether ether ketone, polyallyl sulfone, liquid crystal polymer, etc.).

The hydrazine storage resin is preferably a hydrophilic resin because hydrazine is hydrophilic. The hydrazine storage resin is rendered hydrophilic resin, for example, by introducing a hydrophilic unit such as polyoxyethylene into the main chain, or by introducing a hydrophilic group into a side chain branched from the main chain. In view of the freedom of polymer design, the hydrazine storage resin having a hydrophilic group introduced into the side chain is preferable. Examples of the hydrophilic group include hydroxyl group, carboxyl group, sulfonic acid group, sulfinic acid group, sulfenic acid group, phosphoric acid group, amide group, and quaternary ammonium group.

Examples of the method of introducing a hydrophilic group into a side chain branched from the main chain include copolymerizing a hydrophilic vinyl monomer (described later) in the above-mentioned radical copolymerization, or saponifying polyvinyl acetate. Examples thereof also include, in the above-mentioned condensation polymerization or the like, simultaneously making the compound (e.g., dimethylol propionic acid, etc.) having a reactive functional group and a hydrophilic group together to react.

Next, a method of fixing hydrazine to a hydrazine fixing resin (fixation step) and a method of releasing the hydrazine from the hydrazine fixing resin (hydrazine storage resin) having the hydrazine fixed in the fixation step and then supplying the hydrazine (supply step) will now be described in more detail corresponding to the kind of the above-mentioned main chains.

### (1) Hydrocarbon-Based Hydrazine Storage Resin

A hydrocarbon-based hydrazine storage resin can be obtained in the following manner. First, a hydrazine fixing group-containing vinyl monomer is homopolymerized, or a hydrazine fixing group-containing vinyl monomer and a copolymerizable vinyl monomer copolymerizable with the hydrazine fixing group-containing vinyl monomer are copolymerized, to synthesize a hydrocarbon-based hydrazine fixing resin. Then, hydrazine is supplied from material supply line 5 and fixed to the hydrocarbon-based hydrazine fixing resin, to thereby obtain the hydrocarbon-based hydrazine storage resin. As the copolymerizable vinyl monomer copolymerized with the hydrazine fixing group-containing vinyl monomer, a crosslinking vinyl monomer to be described later can be used to control the hydrophilicity of the hydrocarbon-based hydrazine storage resin as a crosslinking agent and to impart mechanical strength to the hydrocarbon-based hydrazine storage resin.

### (1-1) Synthesis of Hydrocarbon-Based Hydrazine-Fixing Resin

The hydrazine fixing group-containing vinyl monomer is a monomer having both a hydrazine-fixing group and a vinyl group, and includes, for example, acrolein, methyl vinyl ketone, ethyl vinyl ketone, hexyl vinyl ketone, p-acetyl methyl styrene, p-acetyl styrene, methyl acrylate, p-chloromethyl styrene, o-acetyl methyl vinyl alcohol, o-acetyl methyl allyl alcohol, and N-acetyl methyl vinyl pyridine. These hydrazine fixing group-containing vinyl monomers can be used alone or in combination of two or more kinds.

The copolymerizable vinyl monomer is not particularly limited as long as it has a vinyl group and is copolymerizable with a hydrazine fixing group-containing vinyl monomer, and examples thereof include styrene and derivatives thereof, such as styrene, o-methylstyrene, m-methylstyrene, p-methylstyrene, α-methylstyrene, p-chlorostyrene, 3,4-dichlorostyrene, p-phenylstyrene, p-ethylstyrene, 2,4-dimethylstyrene, p-tert-butylstyrene, p-n-hexylstyrene, p-n-octylstyrene, p-n-nonylstyrene, p-n-decylstyrene, and p-n-dodecylstyrene; (meth) acrylate derivatives such as methyl (meth)acrylate, ethyl (meth)acrylate, isopropyl (meth)acrylate, n-butyl (meth)acrylate, t-butyl (meth)acrylate, isobutyl (meth)acrylate, n-octyl (meth)acrylate, 2-ethylhexyl (meth)acrylate, stearyl (meth)acrylate, lauryl (meth)acrylate, and phenyl (meth)acrylate; olefins such as ethylene, propylene, and isobutylene; halogen-containing vinyl monomers such as vinyl chloride, vinylidene chloride, vinyl bromide, vinyl fluoride, and vinylidene fluoride; vinyl esters such as vinyl propionate, vinyl acetate, and vinyl benzoate; vinyl ethers such as methyl vinyl ether and ethyl vinyl ether; N-vinyl compounds such as N-vinyl carbazole, N-vinyl indole, and N-vinyl pyrrolidone; aromatic vinyl monomers such as vinylnaphthalene and vinylpyridine; and acrylic acid and derivatives thereof, such as acrylonitrile, methacrylonitrile, and acrylamide. These copolymerizable vinyl monomers can be used alone or in combination of two or more kinds.

As described above, it is preferable that a hydrophilic vinyl monomer is copolymerized as the copolymerizable vinyl monomer to impart hydrophilicity to the hydrocarbon-based hydrazine storage resin (hydrocarbon-based hydrazine fixing resin).

The hydrophilic vinyl monomer is a monomer having both an ionic dissociation group such as carboxyl group, sulfonic acid group, sulfinic acid group, sulfenic acid group, and phosphoric acid group, and vinyl group. The hydrophilic vinyl monomer includes, for example, acrylic acid, methacrylic acid, maleic acid, itaconic acid, cinnamic acid, fumaric acid, maleic acid monoalkyl ester, itaconic acid monoalkyl ester, styrene sulfonic acid, allyl sulfosuccinic acid, 2-acrylamido-2-methylpropanesulfonic acid, acid phosphoxyethyl metacrylate, and 3-chloro-2-acid phosphoxypropyl metacrylate. These hydrophilic vinyl monomers can be used alone or in combination of two or more kinds.

Further, as the copolymerizable vinyl monomer, a crosslinking vinyl monomer can also be copolymerized to impart mechanical strength to the hydrocarbon-based hydrazine storage resin (hydrocarbon-based hydrazine fixing resin).

The crosslinking vinyl monomer is a monomer having a plurality of vinyl groups, and includes, for example, divinylbenzene, N,N'-methylene-bis(meth)acrylamide, ethyleneglycol di(meth)acrylate, polyethylene glycol di(meth)acrylate, propyleneglycol di(meth)acrylate, glycerin (di- or tri-)acrylate, trimethylolpropane triacrylate, neopentylglycol di(meth) acrylate, triallylamine, triallyl cyanurate, triallyl isocyanurate, tetraaryloxy ethane, and pentaerythritol triallyl ether. These crosslinking vinyl monomers can be used alone or in combination of two or more kinds.

The hydrocarbon-based hydrazine fixing resin can be obtained by mixing a hydrazine fixing group-containing vinyl monomer as an essential component, and, if necessary, mixing a copolymerizable vinyl monomer, or preferably a hydrophilic vinyl monomer and/or a crosslinking vinyl monomer, as an optional component, and performing radical polymerization thereof.

The amount of the copolymerizable vinyl monomer (the hydrophilic vinyl monomer or the crosslinking vinyl monomer) mixed with the hydrazine fixing group-containing vinyl monomer is appropriately selected according to the amount of hydrazine supplied or physical properties required for hydrazine, and for example, the equivalent ratio of the copolymerizable vinyl monomer to the fixing group in the hydrazine-fixing group-containing vinyl monomer is 1:0.01-100, preferably 1:0.1-10, or more preferably 1:0.5-2. More specifically, the equivalent ratio of the hydrophilic vinyl monomer to the fixing group in the vinyl polymer is 1: 0.01-100, preferably 1:0.1-10, or more preferably 1:0.5-2. The amount of the crosslinking vinyl monomer is in the range of, for example, 0.1 to 100 parts by weight, or preferably 1 to 10 parts by weight, per 100 parts by weight of the total of the hydrazine fixing group-containing vinyl polymer and the hydrophilic vinyl monomer.

The radical polymerization is not particularly limited, and can be performed, for example, by adding a radical polymerization initiator and using a known method such as aqueous solution polymerization method or reverse phase suspension polymerization method.

The radical polymerization initiator is not particularly limited, and includes, for example, azo-based polymerization initiators such as 2,2'-azobis-(2,4-dimethylvaleronitrile), 2,2'-azobis(isobutyronitrile), 1,1'-azobis(cyclohexane-1-carbonitrile), 2,2'-azobis-4-methoxy-2,4-dimethylvaleronitrile, azobis(isobutyronitrile), and2,2'-azobis(2-amidinopropane); peroxide-based polymerization initiators such as benzoyl peroxide, methyl ethyl ketone peroxide, diisopropylperoxy carbonate, cumene hydroperoxide, t-butyl hydroperoxide, di-t-butyl peroxide, dicumyl peroxide, 2,4-dichlorobenzoyl peroxide, lauroyl peroxide, 2,2-bis-(4,4-t-butylperoxycyclohexyl)propane, and tris-(t-butylperoxy)triazine; persulfate such as potassium persulfate and ammonium persulfate; and redox-based initiators by combining hydrogen peroxide and reducing agents (ascorbic acid, etc.).

In the radical polymerization, the reaction temperature is not particularly limited as long as it is higher than the radical formation temperature of the above-mentioned radical polymerization initiator, and is in the range of, for example, -10 to 200°C, or preferably 10 to 100°C. The use of a redox-based initiator, however, enables polymerization at approximately room temperature.

The hydrocarbon-based hydrazine-fixing resin can be synthesized outside casing 7. In this case, after the synthesis, the resulting hydrocarbon-based hydrazine-fixing resin is held in casing 7, and hydrazine may be fixed in casing 7 as describe later.

### (1-2) Fixation of Hydrazine to Hydrocarbon-Based Hydrazine Fixing Resin

Hydrazine is fixed to the hydrocarbon-based hydrazine fixing resin obtained above in the following manner. An appropriate amount (preferably an equivalent amount or more) of hydrazine from material supply line 5 is added to a fixing group (a ketone group) in the hydrocarbon-based hydrazine fixing resin. The mixture is then warmed to a temperature, for example, from room temperature to 100°C with heater 9, and stirred with a stirrer (not shown) for 10 minutes to 48 hours. Subsequently, if necessary, the resulting mixture is washed with a proper solvent (e. g. , alcohols, etc.), filtered, and then dried, so that a hydrocarbon-based hydrazine storage resin having hydrazine fixed to the fixing group (the ketone group) is obtained.

### (1-3) Release of Hydrazine From Hydrocarbon-Based Hydrazine Storage Resin and Supply of Hydrazine

The hydrazine is released from the hydrocarbon-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the hydrocarbon-based hydrazine storage resin in the supplied solution, so that the hydrazine fixed to the hydrocarbon-based hydrazine storage resin is released.

Then, the hydrazine released from the hydrazine storage resin is supplied to a supply destination by opening an open/close valve (not shown), so that the hydrazine is supplied to the supply destination through hydrazine supply line 6.

### (2) Polyacrylamide-Based and Polyacrylate-Based Hydrazine Storage Resin

A polyacrylamide-based and a polyacrylate-based hydrazine storage resin can be obtained by first radically polymerizing acrylamide to synthesize polyacrylamide, and then supplying hydrazine from material supply line 5 to the polyacrylamide, so that the hydrazine is fixed thereto.

A polyacrylate-based (polymethacrylate-based) hydrazine storage resin can also be obtained by first radically polymerizing acrylate (methacrylate) to synthesize polyacrylate (polymethacrylate), and then allowing hydrazine to react with the polyacrylate, so that the hydrazine is fixed thereto as a polyacrylic hydrazide.

### (2-1) Synthesis of Polyacrylamide-Based and Polyacrylate-Based Hydrazine Fixing Resin

A polyacrylamide-based hydrazine fixing resin is obtained in the following manner. An acrylamide is mixed with water to prepare an aqueous acrylamide solution, and a radical polymerization initiator is then added to the aqueous acrylamide solution to radically polymerize the acrylamide, so that a polyacrylamide is obtained.

The radical polymerization is not particularly limited and can be performed in the same manner as above. Further, as a radical polymerization initiator, for example, a peroxide-based polymerization initiator such as benzoyl peroxide and hydrogen peroxide, or an azo-based polymerization initiator such as 2,2'-azobis(isobutyronitrile) and 2,2'-azobis-2-methylbutyronitrile is used.

Thereafter, for example, alcohol is added to the polyacrylamide to form a precipitate, and the precipitate is isolated by filtration, so that a polyacrylamide-based hydrazine fixing resin is obtained.

A polyacrylate-based hydrazine fixing resin is obtained by adding a radical polymerization initiator such as AIBN to acrylate to polymerize the acrylate.

The polyacrylamide-based hydrazine fixing resin can also be synthesized outside casing 7 in the same manner as above.

### (2-2) Fixation of Hydrazine to Polyacrylamide-Based and Polyacrylate-Based Hydrazine Fixing Resin

Hydrazine is fixed to the polyacrylamide-based hydrazine fixing resin obtained above in the following manner. An appropriate amount (preferably an equivalent amount or more) of hydrazine is added from material supply line 5 to a fixing group (an amide group) in the polyacrylamide-based hydrazine fixing resin, and the mixture is stirred in the same manner as above. Subsequently, if necessary, the resulting mixture is washed with a proper solvent (e.g., alcohols, etc.), filtered, and then dried, so that a hydrazine storage resin (polyacrylic hydrazide) having hydrazine fixed to the fixing group (the amide group) is obtained.

Further, hydrazine is fixed to the polyacrylate-based hydrazine fixing resin obtained above in the following manner. The polyacrylate-based hydrazine fixing resin is finely pulverized or dissolved in a solvent, and an equivalent amount or more of hydrazine is added to a fixing group (ester group) in the polyacrylate-based hydrazine fixing resin, and the mixture is stirred in the same manner as above. Subsequently, if necessary, the solvent is distilled off or supplied into large quantities of poor solvents, and the resulting mixture is washed with a proper solvent (e.g., alcohols, etc.), filtered, and then dried, so that a polyacrylate-based hydrazine storage resin (polyacrylic hydrazide) having hydrazine fixed to the fixing group (ester group) is obtained.

### (2-3) Release of Hydrazine From Polyacrylamide-Based and Polyacrylate-Based Hydrazine Storage Resin and Supply of Hydrazine

The hydrazine is released from the polyacrylic hydrazide-based hydrazine storage resin obtained above, for example, by supplying water or an alkaline aqueous solution (e. g. , an aqueous NaOH solution, an aqueous KOH solution, etc.) stored in water/alkali tank 3 in casing 7, and dispersing the polyacrylamide-based and polyacrylate-based hydrazine storage resin (polyacrylic hydrazide-based hydrazine storage resin) in the supplied solution, so that the hydrazine fixed to the polyacrylamide-based and polyacrylate-based hydrazine storage resin is released.

Then, the hydrazine released from the hydrazine storage resin is supplied to a supply destination in the same manner as above.

### (3) Polyvinyl Alcohol-Based Hydrazine Storage Resin

A polyvinyl alcohol-based hydrazine storage resin can be obtained in the following manner. First, a hydrazine fixing group-containing vinyl monomer and vinyl acetate are copolymerized to synthesize a hydrazine fixing group-containing polyvinyl acetate copolymer, and then the synthesized product is saponified, so that a polyvinyl alcohol-based hydrazine filing resin copolymer is formed. Thereafter, hydrazine is supplied from material supply line 5 to the polyvinyl alcohol-based hydrazine fixing resin, so that the hydrazine is fixed thereto, thereby obtain a polyvinyl alcohol-based hydrazine storage resin.

### (3-1) Synthesis of Polyvinyl Alcohol-Based Hydrazine Fixing Resin

The hydrazine fixing group-containing vinyl monomer is a monomer having both a hydrazine-fixing group and a vinyl group, and includes, for example, alkyl or aryl vinyl ketone such as methyl vinyl ketone and ethyl vinyl ketone; p-acetyl alkyleneoxy styrene such as p-acetyl methyleneoxy styrene and p-acetyl ethyleneoxy styrene; and p-chloromethyl styrene. These hydrazine fixing group-containing vinyl monomers can be used alone or in combination of two or more kinds.

The copolymerization of the hydrazine fixing group-containing vinyl monomer and the vinyl acetate is performed by mixing them with a proper solvent (e.g., alcohols), and then adding a radical polymerization initiator thereto to perform radical polymerization.

The radical polymerization is not particularly limited and can be performed in the same manner as above. As the radical polymerization initiator, for example, an azo-based polymerization initiator or a peroxide-based polymerization initiator is used.

Thereafter, for example, a polymerization terminator (e.g., nitrobenzene, etc.) is added thereto to terminate the polymerization. Thereafter, an unreacted monomer is distilled off with adding alcohols to form a precipitate in water, and the precipitate is isolated by filtration to obtain a hydrazine fixing group-containing polyvinyl acetate.

Subsequently, the hydrazine fixing group-containing polyvinyl acetate is mixed with a solvent (e.g., alcohols). Then, an alkali (e.g., an aqueous NaOH solution, an aqueous KOH solution, etc.) is added and saponified, to form a precipitate in water again. The precipitate is isolated and dried, so that a polyvinyl alcohol-based hydrazine fixing resin is obtained.

The polyvinyl alcohol-based hydrazine fixing resin can also be synthesized outside casing 7 in the same manner as above.

### (3-2) Fixation of Hydrazine to Polyvinyl Alcohol-Based Hydrazine Fixing Resin

Hydrazine is fixed to the polyvinyl alcohol-based hydrazine fixing resin obtained above in the following manner. An appropriate amount (preferably an equivalent amount or more) of hydrazine is added from material supply line 5 to a fixing group (a ketone group, a halogeno group, a formyl group, an amide group, an ester group, etc.) in the polyvinyl alcohol-based hydrazine fixing resin, and the mixture is stirred in the same manner as above. Subsequently, if necessary, the resulting mixture is washed with a proper solvent (e. g. , alcohols, etc.), filtered, and then dried, so that a polyvinyl alcohol-based hydrazine storage resin having hydrazine fixed to the fixing group (the ketone group, the halogeno group, the formyl group, the amide group, the ester group, etc.) is obtained.

### (3-3) Release of Hydrazine From Polyvinyl Alcohol-Based Hydrazine Storage Resin and Supply of Hydrazine

The hydrazine is released from the polyvinyl alcohol-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the polyvinyl alcohol-based hydrazine storage resin in the supplied solution, so that the hydrazine fixed to the polyvinyl alcohol-based hydrazine storage resin is released.

Then, the hydrazine released from the hydrazine storage resin is supplied to a supply destination in the same manner as above.

### (4) Polyester-Based Hydrazine Storage Resin

A polyester-based hydrazine storage resin can be obtained by first performing condensation polymerization of a hydrazine fixing group-containing polyhydric alcohol and a polybasic acid to synthesize a polyester-based hydrazine fixing resin, and then supplying hydrazine from material supply line 5 to the polyester-based hydrazine fixing resin, so that the hydrazine is fixed thereto.

Either the polyhydric alcohol or the polybasic acid contains a hydrazine-fixing group, or both of them may contain a hydrazine-fixing group.

### (4-1) Synthesis of Polyester-Based Hydrazine Fixing Resin

The hydrazine fixing group-containing polyhydric alcohol is a polyhydric alcohol having both a hydrazine-fixing group and at least two hydroxyl groups, and includes, for example, acetylethyl ethylene glycol. If necessary, for example, an ordinary polyhydric alcohol such as ethylene glycol, propylene glycol, butylene glycol, and neopentyl glycol, can also be used together.

The polybasic acid has at least two carboxylic acids, and includes, for example, aromatic polybasic acid such as orthophthalic acid, isophthalic acid, terephthalic acid, and trimellitic acid; and aliphatic polybasic acid such as adipic acid, azelaic acid, and sebacic acid.

The polyester-based hydrazine fixing resin can be obtained by mixing the hydrazine fixing group-containing polyhydric alcohol and the polybasic acid as essential components, and, if necessary, mixing an ordinary polyhydric alcohol as an optional component, and performing condensation polymerization.

Moreover, when the polybasic acid contains a hydrazine-fixing group and when both the polyhydric alcohol and the polybasic acid contain a hydrazine-fixing group, the polyester-based hydrazine fixing resin can be obtained in the same manner as above.

The polyhydric alcohol and the polybasic acid may be mixed in nearly equivalent amounts, and a known organic metal catalyst is added during the condensation polymerization. The reaction can be performed at a temperature in the range of, for example, 30 to 300°C, or preferably 50 to 250°C, and in the case of poor stability of the material, the reaction is preferably performed under reduced pressure, for example, at 0.1 to 10 mmHg. The polyester-based hydrazine fixing resin can also be synthesized outside casing 7 in the same manner as above.

### (4-2) Fixation of Hydrazine to Polyester-Based Hydrazine Fixing Resin

Hydrazine is fixed to the polyester-based hydrazine fixing resin obtained above in the following manner. An appropriate amount (preferably an equivalent amount or more) of hydrazine is added from material supply line 5 to a fixing group (a ketone group, a halogeno group, a formyl group, an amide group, an ester group, etc.) in the polyester-based hydrazine fixing resin, and the mixture is stirred in the same manner as above. Subsequently, if necessary, the resulting mixture is washed with a proper solvent (e.g., alcohols, etc.), filtered, and then dried, so that a polyester-based hydrazine storage resin having hydrazine fixed to the fixing group (the ketone group, the halogeno group, the formyl group, the amide group, the ester group, etc.) is obtained.

### (4-3) Release of Hydrazine From Polyester-Based Hydrazine Storage Resin and Supply of Hydrazine

The hydrazine is released from the polyester-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the polyester-based hydrazine storage resin in the supplied solution, so that the hydrazine fixed to the polyester-based hydrazine storage resin is released.

Then, the hydrazine released from the hydrazine storage resin is supplied to a supply destination in the same manner as above.

### (5) Polyamide-Based Hydrazine Storage Resin

A polyamide-based hydrazine storage resin can be obtained in the following manner. First, aliphatic polyamide is synthesized by performing condensation polymerization of aliphatic polyvalent amine and aliphatic polybasic acid (in this case, either or both of polyvalent amine and polybasic acid need to contain a hydrazine-fixing group), an aromatic ring-containing polyamide is synthesized by performing condensation polymerization of aromatic polyvalent amine and aliphatic polybasic acid, an aromatic ring-containing polyamide is synthesized by performing condensation polymerization of aliphatic polyvalent amine and aromatic polybasic acid, or an aromatic ring-containing polyamide is synthesized by performing condensation polymerization of aromatic polyvalent amine and aromatic polybasic acid. Then, the aromatic ring of the aromatic ring-containing polyamide is halogenomethylated or a hydrazine-fixing group is introduced later into the synthesized product, so that a polyamide-based hydrazine fixing resin is obtained.

Thereafter, 1) hydrazine is directly introduced into the halogenomethyl group, or after the halogenomethyl group is acetylethylated, hydrazine is supplied from material supply line 5, so that the hydrazine is fixed, to thereby obtain a polyamide-based hydrazine storage resin. Alternatively, a ketone compound having an active hydrogen such as methyl alkyl ketone, methyl allyl ketone, or methyl aralkyl ketone is allowed to react, so that a ketone group can be introduced into the side chain. Further, halogenoacetone, halogenomethyl alkyl ketone, halogenoallyl ketone, or halogenoaralkyl ketone directly reacts with the aromatic ring, so that a ketone group can also be introduced into the side chain.

2) Hydrazine is supplied as is from material supply line 5, so that the hydrazine is fixed to the polyamide-based hydrazine storage resin having a hydrazine fixing group, to thereby obtain a polyamide-based hydrazine storage resin.

### (5-1) Synthesis of Polyamide-Based Hydrazine Fixing Resin

The aliphatic polyvalent amine has at least two amino groups, and includes, for example, ethylenediamine, hexamethylenediamine, and cyclohexanediamine.

The aromatic polyvalent amine has at least two amino groups in the aromatic ring, and includes, for example, aromatic diamine such as meta-xylylene diamine, para-xylylene diamine, phenylene diamine, diaminodiphenyl ether, and diaminodiphenyl methane.

The polybasic acid has at least two carboxylic acids, and includes, for example, aliphatic dicarboxylic acid such as adipic acid, suberic acid, azelaic acid, sebacic acid, dodecanedioic acid, hexahydroterephthalic acid and hexahydroisophthalic acid; and aromatic dicarboxylic acid such as terephthalic acid, isophthalic acid, 2-methylterephthalic acid, 5-methylisophthalic acid, and 2,6-naphthalene dicarboxylic acid.

The condensation polymerization of the aromatic polyvalent amine and the polybasic acid can be performed by mixing them in nearly equivalent amounts, and if necessary, reducing pressure under an inert gas atmosphere to allow the mixture to react. The reaction temperature is in the range of, for example, 30 to 400°C, or preferably 70 to 300°C. Thus, an aromatic ring-containing polyamide is obtained.

Subsequently, the aromatic ring-containing polyamide is dissolved in a proper solvent (e.g., N-methylpyrrolidone), and formaldehyde and hydrochloric acid, hydrobromic acid, or hydroiodic acid are then added thereto to introduce the halogenomethyl group into the aromatic ring of the aromatic ring-containing polyamide. Thereafter, a precipitate is formed in a proper solvent (e.g., alcohols), so that a polyamide-based hydrazine fixing resin is obtained.

The polyamide-based hydrazine fixing resin can also be synthesized outside casing 7 in the same manner as above.

### (5-2) Fixation of Hydrazine to Polyamide-Based Hydrazine Fixing Resin

1) The polyamide-based hydrazine fixing resin obtained above is dissolved in a proper solvent (e.g., N-methylpyrrolidone), and an equivalent amount or more of acetone is then added to the halogenomethyl group. An alkali (e.g., an aqueous NaOH solution, an aqueous KOH solution, etc.) is further added thereto and stirred. This converts the halogenomethyl group to an acetylethyl group. Then, an equivalent amount or more of hydrazine is added from material supply line 5 to a fixing group (a ketone group) in the polyamide-based hydrazine fixing resin, and the mixture is stirred in the same manner as above. Subsequently, if necessary, the resulting mixture is washed with a proper solvent (e.g., alcohols, etc.), filtered, and then dried, so that a polyamide-based hydrazine storage resin having hydrazine fixed to the fixing group (the ketone group) is obtained.

The same reaction procedures are performed when mono-halogenoacetone, mono-halogenomethyl alkyl ketone, mono-halogenomethyl allyl ketone, or mono-halogenomethyl aralkyl ketone is allowed to react. Compounds having a ketone group such as methyl alkyl ketone, methyl allyl ketone, and methyl aralkyl ketone, as well as acetone, and an active hydrogen group can also be used for this purpose.

2) Alternatively, an appropriate amount (preferably an equivalent amount or more) of hydrazine with respect to a halogenomethyl group or the like in the polyamide-based hydrazine fixing resin is added as is from material supply line 5 to the polyamide-based hydrazine fixing resin obtained above, and the mixture is stirred in the same manner as above. Subsequently, if necessary, the resulting mixture is washed with a proper solvent (e.g., alcohols, etc.), filtered, and then dried, so that a polyamide-based hydrazine storage resin having hydrazine fixed, in which the hydrazine-releasable group is a hydrazinomethyl group, is obtained.

3) As for the aliphatic polyamide, after the aliphatic polyamide is formed, it is dissolved in an organic solvent to react with mono-halogenomethyl alkyl ketone such as mono-halogenoacetone and mono-halogenomethyl ethyl ketone, mono-halogenoallyl ketone, or mono-halogenoaralkyl ketone. This reaction causes a ketone group such as an acetyl methyl group to be introduced into the side chain, although the reaction position in the side chain (the ketone group) containing a hydrazine-fixing group cannot be specified. An equivalent amount or more of hydrazine hydrate and the hydrazine-fixing group (the ketone group) are allowed to react, and after the reaction, the resulting product is supplied into a proper solvent (e.g., alcohols), washed, filtered, and then dried, so that an aliphatic polyamide-based hydrazine storage resin having hydrazine fixed as hydrazone is obtained (5-3) Release of Hydrazine From Polyamide-Based Hydrazine Storage Resin and Supply of Hydrazine

The hydrazine is released from the polyamide-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the polyamide-based hydrazine storage resin in the supplied solution, so that the hydrazine fixed to the polyamide-based hydrazine storage resin is released.

Then, the hydrazine released from the hydrazine storage resin is supplied to a supply destination in the same manner as above.

### (6) Polyether-Based Hydrazine Storage Resin

A polyether-based hydrazine storage resin is obtained in the following manner. First, a phenolic derivative is polymerized in the presence of a copper catalyst and a base to synthesize an aromatic ring-containing polyether. Then, the aromatic ring of the aromatic ring-containing polyether is halogenomethylated, so that a polyether-based hydrazine fixing resin is obtained.

Thereafter, 1) the halogenomethyl group is allowed to react with acetone, methyl alkyl ketone, methyl allyl ketone, methyl aralkyl ketone or the like to convert the halogenomethyl group, for example, to an acetylethyl group. Thereafter, hydrazine is supplied from material supply line 5, so that the hydrazine is fixed, to thereby obtain a polyether-based hydrazine storage resin.

2) Alternatively, hydrazine is supplied as is from material supply line 5, so that the hydrazine is fixed to the polyether-based hydrazine fixing resin, to thereby obtain a polyether-based hydrazine storage resin.

### (6-1) Synthesis of Polyether-Based Hydrazine Fixing Resin

The phenolic derivative is a derivative of phenol, and includes, for example, 2,6-dimethylphenol and 2,6-diphenylphenol.

The polymerization of the phenolic derivative is performed in the following manner. If necessary, the phenolic derivative is dissolved in a solvent such as nitrobenzene, for example, a copper catalyst such as copper(I) chloride and copper(II) chloride, and a base such as pyridine are added thereto, and oxygen is brought thereinto with stirring to allow the mixture to react. The reaction temperature is in the range of, for example, 50 to 400°C, or preferably 60 to 200°C. Thereafter, the resulting product is washed with a proper solvent (chloroform or methanol) and dried under reduced pressure to obtain an aromatic ring-containing polyether.

Subsequently, the aromatic ring-containing polyether is dissolved in a proper solvent (e.g., chloroform), and formaldehyde and hydrochloric acid, hydrobromic acid, or hydroiodic acid are then added thereto to introduce the halogenomethyl group into the aromatic ring of the aromatic ring-containing polyether. Thereafter, filtration is performed, so that a polyether-based hydrazine fixing resin is obtained.

The polyether-based hydrazine fixing resin can also be synthesized outside casing 7 in the same manner as above.

### (6-2) Fixation of Hydrazine to Polyether-Based Hydrazine Fixing Resin

1) After the polyether-based hydrazine fixing resin obtained above is dissolved in a proper solvent (e.g., chloroform), an equivalent amount or more of acetone is added to the halogenomethyl group, and an alkali (e.g., an aqueous NaOH solution, an aqueous KOH solution, etc.) is further added thereto and stirred. This converts the halogenomethyl group into an acetylethyl group. Further, a ketone group such as acetyl methyl group can also be introduced into the side chain by making mono-chloroacetone, mono-chloromethyl alkyl ketone, mono-chloromethyl allyl ketone, or mono-chloromethyl aralkyl ketone to react. Then, an appropriate amount (preferably an equivalent amount or more) of hydrazine is added from material supply line 5 to a fixing group (a ketone group) in the polyether-based hydrazine fixing resin, and the mixture is stirred in the same manner as above. Subsequently, if necessary, the resulting mixture is washed with a proper solvent (e.g., alcohols, etc.), filtered, and then dried, so that a polyether-based hydrazine storage resin having hydrazine fixed to the fixing group (the ketone group) is obtained.

2) Alternatively, an equivalent amount or more of hydrazine with respect to the halogenomethyl group in the polyether-based hydrazine fixing resin is added as is from material supply line 5 to the polyether-based hydrazine fixing resin obtained above, and the mixture is stirred in the same manner as above. Subsequently, if necessary, the resulting mixture is washed with a proper solvent (e. g. , alcohols, etc.), filtered, and then dried, so that a polyether-based hydrazine storage resin having hydrazine fixed, in which the hydrazine-releasable group is a hydrazinomethyl group, is obtained.

### (6-3) Release of Hydrazine From Polyether-Based Hydrazine Storage Resin and Supply of Hydrazine

The hydrazine is released from the polyether-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the polyether-based hydrazine storage resin in the supplied solution, so that the hydrazine fixed to the polyether-based hydrazine storage resin is released.

Then, the hydrazine released from the hydrazine storage resin is supplied to a supply destination in the same manner as above.

### (7) Polyether Ketone-Based Hydrazine Storage Resin

A polyether ketone-based hydrazine storage resin can be obtained by first polymerizing dihalogeno benzophenone and diphenol in the presence of alkali to synthesize a polyether ketone-based hydrazine fixing resin, and then supplying hydrazine from material supply line 5 to the polyether ketone-based hydrazine fixing resin, so that the hydrazine is fixed thereto.

### (7-1) Synthesis of Polyether Ketone-Based Hydrazine Fixing Resin

Examples of the dihalogeno benzophenone include 4,4'-dihalo benzophenone, 2,4'-dihalo benzophenone, bis-1,4-(4-halobenzoil) benzene, bis-1,3-(4-halobenzoil) benzene, bis-4,4'-(4-halobenzoil) biphenyl, bis-4,4'-(4-halobenzoil) diphenyl ether.

Examples of the diphenol include hydroquinone, 4,4'-dihydroxybiphenyl, 4,4'-dihydroxybenzophenone, bis(4-hydroxyphenyl) methane, 2,2-bis (4-hydroxyphenyl) propane, 4,4'-dihydroxydiphenyl ether, 4,4'-dihydroxydiphenyl sulfide, and 4,4'-dihydroxydiphenyl sulfone.

The polyether ketone-based hydrazine fixing resin can be obtained by polymerizing dihalogeno benzophenone and diphenol in the presence of alkali.

Examples of the alkali include carbonates of alkali metal, carbonates of alkaline earth metal, bicarbonates of alkali metal, and hydroxides of alkali metal.

The dihalogeno benzophenone and the diphenol may be mixed in nearly equivalent amounts, and a known catalyst and a known solvent are added during the polymerization. The reaction temperature is in the range of, for example, 10 to 300°C, or preferably 50 to 200°C.

Examples of the catalyst include metal oxides, metal halides, and metal salts, and examples of the metal include copper and chromium. The catalyst also includes phyllosillicates such as silica.

Examples of the solvent include aliphatic sulfones such as dimethyl sulfone, diethyl sulfone, and sulfolane; aromatic sulfones such as diphenyl sulfone, ditolyl sulfone, methylphenyl sulfone, dibenzothiophene oxide, phenoxathiin dioxide, and 4-phenylsulfonyl biphenyl; and aromatic ketones such as benzophenone, isophthalophenone, terephthalophenone, 4-benzoyldiphenylether, fluorenone, xanthone, and thioxanthone.

### (7-2) Fixation of Hydrazine to Polyether Ketone-Based Hydrazine Fixing Resin

Hydrazine is fixed to the polyether ketone-based hydrazine fixing resin obtained above in the following manner. After the polyether ketone-based hydrazine fixing resin is dispersed in, for example, an aprotic polar solvent such as dimethyl sulfoxide, an appropriate amount (preferably an equivalent amount or more) of hydrazine is added from material supply line 5 to a fixing group (a ketone group) in the polyether ketone-based hydrazine fixing resin, and the mixture is stirred in the same manner as above. Subsequently, if necessary, the resulting mixture is washed with a proper solvent (e. g. , acetone, etc.), filtered, and then dried, so that a polyether ketone-based hydrazine storage resin having hydrazine fixed to the fixing group (the ketone group) is obtained.

Further, in order to introduce a ketone group into the side chain, a halogenomethylation reaction is performed, acetone, methyl alkyl ketone, methyl allyl ketone, or methyl aralkyl ketone is allowed to react therewith, and for example, an acetylethyl group is introduced thereinto, or mono-halogenomethyl alkyl ketone such as mono-chloroacetone, mono-halogenomethyl allyl ketone, or mono-halogenoaralkyl ketone is allowed to react therewith, and for example, an acetyl methyl group is introduced thereinto, so that a polyether ketone-based hydrazine storage resin also having hydrazine introduced into the ketone group can be obtained.

The polyether ketone-based hydrazine fixing resin can also be synthesized outside casing 7 in the same manner as above.

### (7-3) Release of Hydrazine From Polyether Ketone-Based Hydrazine Storage Resin and Supply of Hydrazine

The hydrazine is released from the polyether ketone-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the polyether ketone-based hydrazine storage resin in the supplied solution, so that the hydrazine fixed to the polyether ketone-based hydrazine storage resin is released.

Then, the hydrazine released from the hydrazine storage resin is supplied to a supply destination in the same manner as above.

### (8) Polythioether-Based Hydrazine Storage Resin

A polythioether-based hydrazine storage resin is obtained in the following manner. First, dihalogenobenzene and sodium sulfide are allowed to react to synthesize an aromatic ring-containing polythioether, and then, the aromatic ring of the aromatic ring-containing polythioether is halogenomethylated, to thereby obtain a polythioether-based hydrazine fixing resin.

Thereafter, 1) the halogenomethyl group is allowed to react with, for example, acetone to convert the halogenomethyl group to an acetylethyl group. Thereafter, hydrazine is supplied from material supply line 5, so that the hydrazine is fixed, to thereby obtain a polythioether-based hydrazine storage resin.

2) Alternatively, hydrazine is supplied as is from material supply line 5, so that the hydrazine is fixed to the polythioether-based hydrazine fixing resin, to thereby obtain a polythioether-based hydrazine storage resin.

### (8-1) Synthesis of Polythioether-Based Hydrazine Fixing Resin

Examples of the dichlorobenzene include p-dichlorobenzene.

The reaction of the dihalogenobenzene and the sodium sulfide is performed in the following manner. First, the sodium sulfide is dissolved in a polar solvent such as N-methylpyrrolidone, and the mixture is heated to decompose the sodium sulfide into hydrogen sulfide. Subsequently, the dihalogenobenzene is added thereto to allow the mixture to react. The reaction temperature is in the range of, for example, 5 to 200°C, or preferably 25 to 150°C. Thereafter, the resulting product is washed with a proper solvent (e.g., alcohols) and dried to obtain an aromatic ring-containing polythioether.

Subsequently, the aromatic ring-containing polythioether is dissolved in a proper solvent (e.g., dimethyl sulfoxide), and formaldehyde and hydrochloric acid, hydrobromic acid, or hydroiodic acid are then added thereto to introduce the halogenomethyl group into the aromatic ring of the aromatic ring-containing polythioether. Thereafter, filtration is performed, so that a polythioether-based hydrazine fixing resin is obtained.

The polythioether-based hydrazine fixing resin can also be synthesized outside casing 7 in the same manner as above.

### (8-2) Fixation of Hydrazine to Polythioether-Based Hydrazine Fixing Resin

1) After the polythioether-based hydrazine fixing resin obtained above is dissolved in a proper solvent (e.g., dimethyl sulfoxide), an equivalent amount or more of acetone, methyl alkyl ketone, methyl allyl ketone, or methyl aralkyl ketone is added to the halogenomethyl group, and an alkali (e.g., an aqueous NaOH solution, an aqueous KOH solution, etc.) are further added thereto and stirred. This converts the halogenomethyl group to an acetylethyl group. Then, an appropriate amount (preferably an equivalent amount or more) of hydrazine is added from material supply line 5 to a fixing group (a ketone group) in the polythioether-based hydrazine fixing resin, and the mixture is stirred in the same manner as above. Subsequently, if necessary, the resulting mixture is washed with a proper solvent (e.g., alcohols, etc.), filtered, and then dried, so that a polythioether-based hydrazine storage resin having hydrazine fixed to the fixing group (the ketone group) is obtained.

2) Alternatively, an equivalent or more of hydrazine with respect to the halogenomethyl group in the polythioether-based hydrazine fixing resin is added as is from material supply line 5 to the polythioether-based hydrazine fixing resin obtained above, and the mixture is stirred in the same manner as above. Subsequently, if necessary, the stirred mixture is washed with a proper solvent (e. g. , alcohols, etc.), filtered, and then dried, thereby obtaining a polythioether-based hydrazine storage resin in which the hydrazine-releasable group is a hydrazinomethyl group and hydrazine is fixed.

### (8-3) Release of Hydrazine From Polythioether-Based Hydrazine Storage Resin and Supply of Hydrazine

The hydrazine is released from the polythioether-based hydrazine storage resin obtained above, for example, by supplying water or an alkaline aqueous solution (e.g., an aqueous NaOH solution, an aqueous KOH solution, etc.) stored in water/alkali tank 3 in casing 7, and dispersing the polythioether-based hydrazine storage resin in the supplied solution, so that the hydrazine fixed to the polythioether-based hydrazine storage resin is released.

Then, the hydrazine released from the hydrazine storage resin is supplied to a supply destination in the same manner as above.

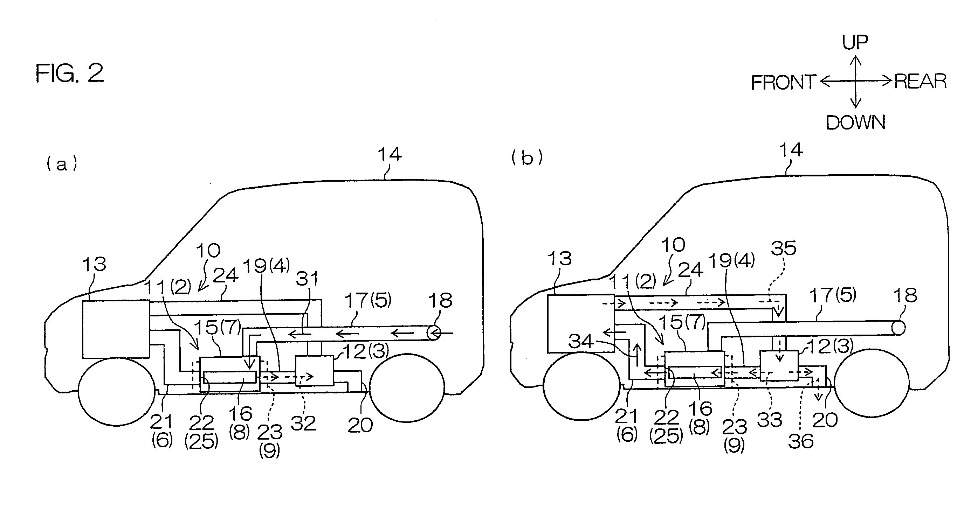

FIG. 2 is a schematic configuration diagram showing an on-vehicle fuel cell system according to one embodiment of the fuel cell system of the present invention, FIG. 2 (a) showing the step of fixing hydrazine, and FIG. 2(b) showing the step of supplying hydrazine. In these figures, solid-line arrows represent the flow of hydrazine and dashed line arrows represent the flow of water. The component elements are designated together with the corresponding component elements shown in FIG. 1 added in parentheses.

In FIG. 2, fuel cell system 10 is a fuel cell system that uses hydrazine as a fuel, and includes the above-mentioned hydrazine supply device 1 (more specifically, a hydrazine tank 11 (hydrazine fixing bath 2) for storing hydrazine and a water/alkali tank 12 (water/alkali tank 3)) and a fuel cell 13.

Fuel cell system 10 is an on-vehicle fuel cell system, and is mounted on a vehicle 14.

Hydrazine tank 11 includes a casing 15 (casing 7) and a hydrazine fixing member 16 (hydrazine fixing member 8) that can be held in casing 15.

Casing 15 is a container for storing hydrazine, and composed of the same material as the casing 7 shown in FIG. 1.

The upper surface of casing 15 is connected with one end of a material supply pipe 17 (material supply line 5), and the other end of material supply pipe 17 is connected with a supply port 18.

Supply port 18 is an opening formed in the rear side surface of vehicle 14, and is closed with, for example, a lid which is not shown, at normal time (e.g., during driving). Hydrazine can be supplied into casing 15 through material supply pipe 17 by injecting the hydrazine from supply port 18.

The rear surface of casing 15 is connected with one end of a water flow pipe 19 (water/alkali supply line 4) and the other end of water flow pipe 19 is connected to water/alkali tank 12, so that casing 15 and water/alkali tank 12 are communicated via water flow pipe 19.

Water/alkali tank 12 is a container for storing water or an alkaline aqueous solution (e.g., an aqueous KOH solution, an aqueous NaOH solution, etc.), and composed of the same material as water/alkali tank 3 shown in FIG. 1.

Water flow pipe 19 is provided with a pump which is not shown, and when this pump is driven, a liquid in casing 15 or water/alkali tank 12 can be supplied from one side to the other side through water flow pipe 19

The rear surface of water/alkali tank 12 is connected with one end of a drain pipe 20, and the other end of drain pipe 20 is connected with the undersurface of vehicle 14 where its exit is exposed.

Drain pipe 20 is provided with an open/close valve which is not shown, and the opening of the open/close valve allows water stored in water/alkali tank 12 to be properly drained out of the vehicle.

Casing 15 also includes a stirrer which is not shown, so that the water or the alkaline aqueous solution supplied in casing 15 can be properly stirred.

The front surface of casing 15 is connected with one end of a hydrazine supply pipe 21 (hydrazine supply line 6), and the other end of hydrazine supply pipe 21 is connected with fuel cell 13.

Hydrazine supply pipe 21 is provided with a pump which is not shown, and when this pump is driven, an aqueous hydrazine solution or an alkaline aqueous solution in casing 15 can be supplied into fuel cell 13 through hydrazine supply pipe 21.

The connecting portion between casing 15 and hydrazine supply pipe 21 is provided with a filter 22 (filter 25) so as to cover the opening of hydrazine supply pipe 21.

Filter 22 is not particularly limited as long as it is a membrane (e.g., known molecular sieve membranes such as ultrafiltration membrane, etc.) capable of separating hydrazine from hydrazine fixing member 16 according to the size of their molecules or a filter capable of capturing impurities or degraded resins in suspension in casing 15. Even if a water soluble or an alkali soluble substance is used as hydrazine fixing member 16, as long as filter 22 is provided, filter 22 can separate hydrazine fixing member 16 that is not particularly required for electric power generation of fuel cell 13. This can prevent hydrazine fixing member 16 from flowing out into fuel cell 13 through hydrazine supply pipe 21. In addition to this, the impurities or the like in casing 15 can also be prevented from flowing out.

If necessary, a heater 23 (heater 9) capable of warming casing 15 is provided so as to cover the lower portion of casing 15.

Hydrazine fixing member 16 is a synthetic resin (synthetic polymer) capable of fixing and releasing hydrazine, and composed of the same resin as hydrazine fixing member 8 shown in FIG. 1.

Fuel cell 13 is not particularly limited as long as it is a fuel cell capable of using hydrazine as a fuel. Fuel cell 13 includes, for example, known fuel cells such as a polymer electrolyte fuel cell and is arranged in the front portion of vehicle 14.

The structure of fuel cell 13 is not particularly limited, and is formed as a stack structure in which a plurality of fuel battery cells are stacked, as seen in the fuel cell described in International Patent Publication No.WO2003/056649.

As described above, fuel cell 13 is connected with the other end of_hydrazine supply pipe 21, and hydrazine used as a fuel is supplied from casing 15 through hydrazine supply pipe 21.

Further, fuel cell 13 is electrically connected with a motor which is not shown, and electric power generated in fuel cell 13 is transmitted to the motor (not shown), whereby the electric power is converted into a driving force of vehicle 14.

In addition, fuel cell 13 is connected with the end of a water pipe 24, and the other end of water pipe 24 is connected to water/alkali tank 12, so that fuel cell 13 and water/alkali tank 12 are communicated via water pipe 24.

Water pipe 24 can supply the water or the alkaline aqueous solution that is supplied as a fuel from hydrazine supply pipe 21 and then obtained after consumption of hydrazine, and the water produced with fuel cell 13 to be described later, into water/alkali tank 12.

Next, a method for utilizing fuel cell system 10 in vehicle 14 will be described in more detail.

In order to safely use hydrazine as a fuel for fuel cell system 10, hydrazine is fixed to hydrazine fixing member 16 (fixation step) at normal time (when electric power is not generated in fuel cell 13), released during electric power generation, and supplied (supply step).

### (1) Fixation Step (cf. FIG. 2(a))

First, hydrazine is injected from supply port 18 and supplied into casing 15 through material supply pipe 17 (arrow 31) . Then, the hydrazine is fixed to hydrazine fixing member 16 by properly heating or stirring in casing 15 as described above. Depending on the kind of hydrazine fixing member 16, for example, polyacrylic hydrazide, water is produced with the fixation, so that a pump (not shown) is driven to supply the water to water/alkali tank 12 through water flow pipe 19 (arrow 32). With such fixation, hydrazine is stored in casing 15 until the time of electric power generation to be described later while being fixed to hydrazine fixing member 16 (e.g., hydrazine-releasable group, etc.), so that hydrazine can be safely stored.

### (2) Supply Step (cf. FIG. 2(b))

To use the hydrazine fixed in the above step as a fuel for fuel cell 13, a pump (not shown) is driven to supply water or an alkaline aqueous solution stored in water/alkali tank 12 to casing 15 (arrow 33). This releases the hydrazine fixed to hydrazine fixing member 16. In order to use the released hydrazine as a fuel for fuel cell 13, a pump (not shown) is driven to supply the hydrazine to fuel cell 13 through hydrazine supply pipe 21 (arrow 34).

In fuel cell 13, an electromotive force is generated, for example, by the electrochemical reaction (cf. reaction formulae (3) and (4)) described in International Patent Publication No.WO2003/056649. This electromotive force is then transmitted to a motor (not shown), so that the electromotive force is converted into a driving force of vehicle 14.

As the electromotive force generates, water is produced. This water, however, can be used to release hydrazine, so that the water is stored in water/alkali tank 12 through water pipe 24 (arrow 35).

When water/alkali tank 12 becomes full, water is properly drained from drain pipe 20 (arrow 36) in order to prevent backflow of water to the water flow pipe 19. When an alkaline aqueous solution is being used to release hydrazine, a water separation device (e.g., ion exchanger, etc.) is provided in the middle of drain pipe 20, and with this water separation device, the alkali component is separated from the drainage, and water is then drained.

As explained above, according to fuel cell system 10, hydrazine is stored in casing 15 while being fixed to hydrazine fixing member 16 (e.g., hydrazine-releasable group, etc.) and when used as a fuel for fuel cell 13, such fixed hydrazine is released by the above-mentioned release method. Therefore, hydrazine can be safely used and is widely utilized in various industrial fields requiring the fuel cell system employing hydrazine as a fuel.

With fuel cell system 10, after hydrazine is released from hydrazine fixing member 16, hydrazine can be replenished again from supply port 18 to fix the hydrazine. Specifically, the replenishment of hydrazine as a fuel enables continuous electric power generation.

Moreover, hydrazine used as a fuel does not generate carbon dioxide (CO₂) along with the electric power generation, so that vehicle 14 with fuel cell system 10 mounted can reduce burdens on the environment as compared with, for example, vehicles using gasoline as a fuel.

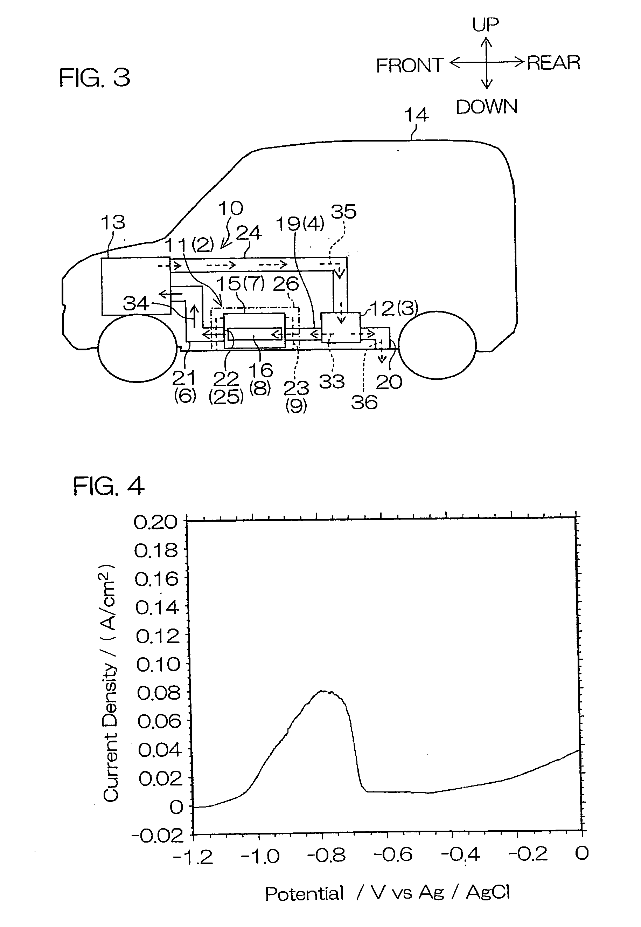

FIG. 3 is a diagram showing a variation of fuel cell system 10. In FIG. 3, the component elements are designated together with the corresponding component elements shown in FIG. 1 added in parentheses.

Fuel cell system 10 in FIG. 3 is a cartridge-type fuel cell system capable of replacing casing 15.

Vehicle 14 according to this embodiment has in the side surface an opening 26 (closed with a lid, which is not shown, at normal time) having a size allowing casing 15 to be taken out, so that casing 15 can be replaced through opening 26. That is, in the supply step (cf. FIG. 2 (b)), after all the hydrazines in casing 15 initially mounted were supplied to fuel cell 13, when the initial casing 15 is replaced with a new casing 15 (this casing 15 is holding hydrazine fixing member 16 with hydrazine fixed), electric power can be continuously generated without the need for hydrazine to be repeatedly replenished from supply port 18 (cf. FIG. 2). Thus, users can eliminate the work of directly handling hydrazine, so that hydrazine can be more safely used as a fuel.

In this embodiment, opening 26 is provided in the side surface of vehicle 14. However, the location is not particularly limited thereto as long as it is a place where casing 15 can be replaced. Therefore, opening 26 can also be provided, for example, in the bottom of vehicle 14. The operation of the hydrazine supply step in FIG. 3 is the same operation as described in FIG. 2, so that the description thereof will be omitted herein.

### EXAMPLES

While in the following, the present invention is described in further detail with reference to Examples, the present invention is not limited to any of them by no means. Example 1 (Hydrocarbon-Based Amide Crosslinking Hydrazine Storage Resin (Fixing Group: Ketone Group))

### 1) Synthesis of Hydrocarbon-Based Amide Crosslinking Hydrazine Fixing Resin

An amount 20 g of methyl vinyl ketone, 59 g of sodium p-styrene sulfonate, 2.3 g of N,N'-methylene-bis-acrylamide as a crosslinking agent, and 79 g of ion exchange water were uniformly mixed to prepare an aqueous polymerization solution, and the aqueous polymerization solution was supplied into a polymerization tank. The dissolved oxygen content in the aqueous polymerization solution was set to 0.2 ppm by introduction of nitrogen gas into the aqueous polymerization solution, and the solution temperature was set to 5°C.

To this aqueous polymerization solution, 10 g of 0.1% hydrogen peroxide, 5 g of a 0.1% aqueous ascorbic acid solution, and 2.3 g of V-50 (azo-based polymerization initiator, manufactured by Wako Pure Chemical Industries, Ltd.) were added. After approximately 20 minutes, a temperature rise indicating initiation of polymerization was confirmed. Subsequently, the temperature was increased to 65°C, and the polymerization was continued at the temperature for approximately 8 hours, to obtain a hydrated gel-like polymer.

The hydrated gel-like polymer thus obtained was pulverized into small pieces using a meat chopper, and the resulting small pieces of the hydrated gel polymer were through air dried under the conditions of a supply air temperature of 120°C and an air velocity of 1.5 m/sec for 70 minutes using a aeration-type hot air dryer (manufactured by Inoue Kinzoku Kogyo Co., Ltd.), to obtain a dried product having a moisture content of approximately 4%.

The dried product was pulverized with a mixer for household use and sieved off to collect a portion of the pulverized material which passed through a 22-mesh wire net (710 µm in diameter) but not through a 100-mesh wire net (125 µm in diameter), so that a hydrophilic hydrazine fixing resin (hydrocarbon-based amide crosslinking hydrazine fixing resin (fixing group: ketone group)) was obtained.

The absorption magnification of the hydrophilic hydrazine fixing resin was 9 times its mass. The absorption magnification was obtained in the following manner. One gram of the hydrophilic hydrazine fixing resin was placed in a tea bag (20 cm long and 10 cm wide) made of a 250 mesh nylon net. The bag was immersed in physiological saline (an aqueous ion exchange solution containing 0.90% NaCl) for 60 minutes. Thereafter, the bag was hung up for 15 minutes to drain water. Residual water was then removed by centrifugal drying, and the bag was measured for the increased mass.

### 2) Fixation of Hydrazine to Hydrocarbon-Based Amide Crosslinking Hydrazine Fixing Resin

To the hydrophilic hydrazine fixing resin obtained in step 1) above was added a 100% hydrazine hydrate containing hydrazine in twice the molar amount of the ketone group contained in 2 g of the resin, and the mixture was stirred for 60 minutes, so that the hydrazine was fixed to the hydrophilic hydrazine fixing resin, thereby obtaining a hydrophilic hydrazine storage resin.

After completion of the reaction, 40 ml of isopropyl alcohol was added thereto, and the mixture was stirred for 1 hour, filtered, and washed. The hydrophilic hydrazine storage resin was then isolated by filtration and dried under reduced pressure. The content of hydrazine in the isopropyl alcohol filtrate was quantified by HPLC (high-performance liquid chromatography). As a result, the content of free hydrazine was 45.9%. That is, the content of fixed hydrazine was 54.1%. This corresponds to a hydrazine adsorption ratio of 108.2% based on the initial content of the ketone group in the resin.

### 3) Release of Hydrazine From Hydrocarbon-Based Amide Crosslinking Hydrazine Storage Resin

### 3-1) Release With Alkali

An amount 0.8 g of the hydrophilic hydrazine storage resin obtained in step 2) above was dispersed and stirred in a 1 N aqueous KOH solution at room temperature. The content of hydrazine in the 1 N aqueous KOH solution was quantified by HPLC. As a result, the content of the hydrazine was 72.1%. 3-2) Re-fixation

To the hydrophilic hydrazine fixing resin from which the hydrazine was released in step 3-1) above was added a 100% hydrazine hydrate containing hydrazine in twice the molar amount of the ketone group contained in 0. 6 g of the resin, and the mixture was stirred for 60 minutes, so that the hydrazine was fixed to the hydrophilic hydrazine fixing resin, thereby obtaining a hydrophilic hydrazine storage resin again.

After completion of the reaction, 40 ml of isopropyl alcohol was added thereto, and the mixture was stirred for 1 hour, filtered, and washed. The hydrophilic hydrazine storage resin was then isolated by filtration and dried under reduced pressure. The content of hydrazine in the isopropyl alcohol filtrate was quantified by HPLC. As a result, the content of free hydrazine was 64.8%. That is, the content of fixed hydrazine was 50.8% based on the content of the ketone group. This corresponds to 70.4% as the hydrazine conversion ratio relative to the residual ketone group before the re-fixation. 3-3) Release with Water

An amount 0. 8 g of the hydrophilic hydrazine storage resin obtained in step 2) above was dispersed and stirred in water at room temperature. The content of hydrazine in water was quantified by HPLC. The result confirmed that 72.8% of the fixed hydrazine was released. This corresponds to 78.8% as the hydrazine conversion ratio relative to the initial ketone group.

### Example 2(Hydrocarbon-Based Amide Crosslinking Hydrazine Storage Resin (Fixing Group: Ketone Group))

### 1) Fixation of Hydrazine to Hydrocarbon-Based Amide Crosslinking Hydrazine Fixing Resin

To the hydrophilic hydrazine fixing resin obtained in step 1) of Example 1 was added hydrazine in an equimolar amount to the ketone group contained in the resin, and the same procedures as in step 2) of Example 1 were performed. The result showed that the content of hydrazine in the isopropyl alcohol filtrate was 13.9%. That is, the content of the fixed hydrazine was 86.1%. This corresponds to a hydrazine adsorption ratio of 86.1% based on the initial content of the ketone group in the resin.

### 2) Release of Hydrazine From Hydrocarbon-Based Amide Crosslinking Hydrazine Storage Resin

An amount 0.8 g of the hydrophilic hydrazine storage resin obtained in step 1) above was dispersed and stirred in a 1 N aqueous KOH solution at room temperature. The content of hydrazine in the 1 N aqueous KOH solution was quantified by HPLC. As a result, the content of the hydrazine was 18.8%. This corresponds to 21.8% of the released hydrazine based on the initial content of the ketone group.

### Example 3 (Hydrocarbon-Based Ether Crosslinking Hydrazine Storage Resin)

### 1) Synthesis of Hydrocarbon-Based Ether Crosslinking Hydrazine Fixing Resin

A hydrophilic hydrazine fixing resin (hydrocarbon-based ether crosslinking hydrazine fixing resin) was obtained by the same procedures as in step 1) of Example 1, except that pentaerythritol triallyl ether was used in place of N,N'-methylene-bis-acrylamide.

The absorption magnification of the hydrophilic hydrazine fixing resin was 0.1 times its mass.

### 2) Fixation of Hydrazine to Hydrocarbon-Based Ether Crosslinking Hydrazine Fixing Resin

To the hydrophilic hydrazine fixing resin obtained in step 1) above was added a 100% hydrazine hydrate containing hydrazine in an equimolar amount to the ketone group contained in 2 g of the resin, and the mixture was stirred for 60 minutes, so that the hydrazine was fixed to the hydrophilic hydrazine fixing resin, thereby obtaining a hydrophilic hydrazine storage resin.

After completion of the reaction, the reaction product was washed with 40 ml of isopropyl alcohol. The hydrophilic hydrazine storage resin was then isolated by filtration and dried under reduced pressure. The content of hydrazine in the isopropyl alcohol filtrate was quantified by HPLC. As a result, the content of free hydrazine was 13.0%. That is, the content of fixed hydrazine was 87.0%.

### 3) Release of Hydrazine From Hydrocarbon-Based Ether Crosslinking Hydrazine Storage Resin

An amount 0.8 g of the hydrophilic hydrazine storage resin obtained in step 2) above was dispersed and stirred in a 1 N aqueous KOH solution at room temperature for 60 minutes. Subsequently, after 40 ml of methanol was added thereto to gelate the hydrophilic hydrazine storage resin. The gelated hydrophilic hydrazine storage resin was then isolated by filtration, and the content of hydrazine in the alcohol filtrate was quantified by HPLC. The result confirmed that 19.4% of the fixed hydrazine was released. This corresponds to 22.3% of the hydrazine conversion ratio relative to the initial ketone group.

### Example 4 (Hydrocarbon-Based Amide Crosslinking Hydrazine Storage Resin (Fixing Group: Aldehyde Group))

An amount 16 g of acrolein, 59 g of sodium p-styrene sulfonate, 2.3 g of N,N'-methylene-bis-acrylamide as a crosslinking agent, and 79 g of ion exchange water were uniformly mixed to prepare an aqueous polymerization solution, and the aqueous polymerization solution was supplied into a polymerization tank. The dissolved oxygen content in the aqueous polymerization solution was set to 0.2 ppm by introduction of nitrogen gas into the aqueous polymerization solution, and the solution temperature was set to 5°C.

To this aqueous polymerization solution, 10 g of 0.1% hydrogen peroxide, 5 g of a 0.1% aqueous ascorbic acid solution, and 2.3 g of V-50 (azo-based polymerization initiator, manufactured by Wako Pure Chemical Industries, Ltd.) were added. After approximately 20 minutes, a temperature rise indicating initiation of polymerization was confirmed. Subsequently, the temperature was increased to 65°C, and the polymerization was continued at the temperature for approximately 8 hours, to obtain a hydrophilic hydrazine fixing resin made of water-soluble polymers (a hydrocarbon-based amide crosslinking hydrazine fixing resin (fixing group: aldehyde group)).

An 60% hydrazine hydrate aqueous solution in a molar amount equivalent to the aldehyde group contained in the hydrophilic hydrazine fixing resin thus obtained was added and stirred for 30 minutes, so that hydrazine was fixed to the hydrophilic hydrazine fixing resin, thereby obtaining a hydrophilic hydrazine storage resin. To this reaction solution was added 100 g of methanol and stirred to solidify the hydrophilic hydrazine storage resin. The solidified hydrophilic hydrazine storage resin was isolated by filtration, and dried under reduced pressure. Although the content of hydrazine in the methanol filtrate was quantified by iodometry, free hydrazine was not detectable. That is, all of the hydrazine was fixed.

Then, water was added to the hydrophilic hydrazine storage resin thus isolated and dried, and the mixture was stirred. The hydrophilic hydrazine storage resin was separated using a molecular sieve membrane which allows molecules having a molecular weight of 1000 or less to pass through. As a result of quantifying the amount of the filtrate by HPLC, free hydrazine was detected in an amount equivalent to 97.7% of the hydrazine fixed as hydrazone.

### Example 5 (Acrylamide-Based Hydrazine Storage Resin)

Ten grams of acrylamide and 25.9 ml of water were mixed to prepare an aqueous acrylamide solution. Thereto was added 4.1 g of a 35% hydrogen peroxide and stirred at 85 to 90°C for 16 hours. The reaction solution was injected into a 10-fold amount of methanol to form a white precipitate, and the precipitate was isolated by filtration. Thereafter, the precipitate was dried to obtain polyacrylamide (average molecular weight: 22,000).

Ten grams of the polyacrylamide thus obtained and 17 ml of water were mixed to prepare an aqueous polyacrylamide solution. Thereto was added 21.12 g of a 100% hydrazine hydrate and stirred at 80 to 85°C for 15 hours. The reaction solution was injected into a 10-fold amount of methanol to form a white precipitate. The precipitate was isolated by filtration and dried to obtain a polyacrylic hydrazide (acrylamide-based hydrazine storage resin). The polyacrylic hydrazide thus obtained had an average molecular weight of 23,000 and a hydrazide conversion ratio of 82%.

This polyacrylic hydrazide was dissolved in a 1 N aqueous KOH solution in an amount equal to or more than the molar amount of the polyacrylic hydrazide. This hydrolyzed hydrazide to release the hydrazine hydrate. Thereafter, as a result of HPLC analysis, free hydrazine in an amount equivalent to 14.7% of the hydrazine fixed as hydrazide was detected. The polyacrylic hydrazide was converted to a potassium polyacrylate.

### Example 6 (Vinyl Alcohol-Based Hydrazine Storage Resin)

A 500 ml-three-neck flask was equipped with a stirrer, a capacitor, and a thermometer, and charged with 86 g of vinyl acetate, 152 g of p-acetyl methyleneoxy styrene, and 50 ml of methanol. The hot-water bath temperature was increased to 60 to 63°C, with stirring the content.

When the mixture solution was boiled in the flask and reflux was confirmed, 0.10 g of AIBN (azobisisobutyronitrile, manufactured by Otsuka Chemical Co., Ltd.) preliminarily dissolved in 10 g of methanol was added. The mixture was immediately foamed to initiate polymerization. The polymerization was continued as is for 5 hours, and a small amount of dinitrobenzene (polymerization terminator) was added to terminate the polymerization.

Subsequently, heating was continued while methanol was added dropwise, so that an unreacted monomer was distilled off. The solution containing polymers was injected into large quantities of water to form a precipitate of the polymers. The precipitate was then filtered and washed with diluted methanol and water. The resulting solid was dissolved in methanol, and a 1N aqueous KOH solution was added dropwise to the solution. The mixture was fully stirred to be saponified and then removed as potassium acetate. The solution containing the saponified polymer was injected into large quantities of iced water to isolate the polymer (solid).

The isolated polymer was dried under reduced pressure. Thereto was added a 60% hydrazine hydrate in a molar amount equivalent to the p-acetyl methyleneoxy styrene that was assumed to have completely reacted, and the mixture was stirred for 5 hours. The reaction solution was washed with methanol, filtered, and dried under reduced pressure, so that a vinyl alcohol-based hydrazine storage resin was obtained. The content of hydrazine hydrate in the filtrate was quantified by iodometry. The result confirmed that 43.8% of the stoichiometrical amount of the ketone group contained in the vinyl alcohol-based hydrazine storage resin was fixed as hydrazone.

A 1N KOH was added to the vinyl alcohol-based hydrazine storage resin and stirred. Subsequently, as a result of iodometry, free hydrazine was detected in an amount equivalent to 88.1% of the fixed hydrazine.

### Example 7 (Polyester-Based Hydrazine Storage Resin)

A 500 ml-three-neck flask equipped with a rectifying column was charged with 75. 5 g of terephthalic acid, 101.6 g of acetylethyl ethylene glycol, 0.075 g of titanate tetra-n-butylester, and 0.03 g of butyl hydroxytinoxide.

The mixture was fully stirred to generate water. The water thus generated was distilled off while maintaining the temperature at 220 to 250°C, and the reaction mixture was esterified until it became transparent. The resulting product and 0. 02 g of titanate tetra-n-butylester were charged into an autoclave, mixed, and heated at 250°C under reduced pressure (1 mmHg) for 2 hours. The resulting condensate was dissolved in hexamethylphosphoramide (HMPA), and supplied into large quantities of water under strong stirring, so that the condensate was precipitated. The condensate was then filtered off, washed with methanol, and dried under reduced pressure.

To the condensate was added a 60% hydrazine hydrate in an equimolar amount to the ketone group (stoichiometrical amount) and stirring was performed a whole day. Methanol was added thereto and the condensate was filtered off. The condensate was further washed with methanol, and dried under reduced pressure, so that a polyester-based hydrazine storage resin was obtained. The content of hydrazine hydrate in the methanol filtrate was quantified by iodometry. As a result, the content of free hydrazine hydrate was 72.8%. That is, the content of fixed hydrazine hydrate was 27.2%.

This polyester-based hydrazine storage resin was dispersed in a 1 N aqueous KOH solution and stirred for 1 hour. Subsequently, the polyester-based hydrazine storage resin was filtered off, and the hydrazine in the filtrate was titrated by iodometry. As a result, free hydrazine in an amount equivalent to 80.5% of the fixed hydrazine was detected.

### Example 8 (Polyamide-Based Hydrazine Storage Resin-1)

A test tube equipped with a nitrogen introducing tube and a cock for reducing pressure was charged with 9.91 g of 4,4'-diaminodiphenyl methane and 10.62 g of sebacic acid, and the mixture was heated to 285°C under a nitrogen gas stream to be melted. Then, the reaction system was decompressed to approximately 1.33 kPa and allowed to react for 1 hour. Then, the reaction system was again cooled to room temperature at normal pressure under a nitrogen gas stream. Subsequently, the test tube was broken and the obtained polyamide was pulverized with a pulverizer. The pulverized powder was dissolved in N-methylpyrrolidone and washed with water. When the resulting solution was supplied into large quantities of methanol, a condensate powder was precipitated out. This condensate was dissolved in N-methylpyrrolidone, and formalin in twice the molar amount equivalent to the condensate and hydrochloric acid were added and stirred for 5 hours (thus, two chloromethyl groups were introduced into the 4,4'-diaminodiphenyl methane) . This reaction product was supplied into large quantities of methanol, to obtain a chloromethylated condensate powder.

This condensate was dissolved in N-methylpyrrolidone, acetone was added in an excessive amount relative to the 4, 4' -diaminodiphenyl methane, and a 1 N aqueous KOH solution in twice the molar amount equivalent to the 4 and 4'-diaminodiphenyl methane was further added dropwise under stirring. After completion of the reaction, the reaction solution was supplied into large quantities of methanol, to obtain a condensate powder. In this condensate, an average of one acetylethyl group was introduced into the aromatic ring of the aromatic ring-containing -aliphatic polyamide.

A 60% hydrazine hydrate in a molar amount equivalent to the carbonyl group was added to the condensate powder and stirred for 2 hours. The resulting mixture was then supplied into methanol. This forms a powdery precipitate having a hydrazone group. This solid was filtered off and dried under reduced pressure, to obtain a polyamide-based hydrazine storage resin.

### Example 9 (Polyamide-Based Hydrazine Storage Resin-2)

A chloromethylated condensate powder was obtained by the same procedures as in Example 8. Thereafter, a 60% hydrazine hydrate in an equimolar amount to the chloromethyl group in the condensate was added and stirred for 2 hours. The resulting mixture was then supplied into methanol, to form a precipitate having a hydrazinomethyl group (polyamide-based hydrazine storage resin). The content of the precipitate was quantified by iodometry, and the hydrazino group was confirmed in an amount equivalent to 76.8% of the stoichiometrically calculated amount thereof.

### Example 10 (Polyether-Based Hydrazine Storage Resin-1)

A 500 ml-three-neck flask equipped with a stirrer, an oxygen introducing tube, and a thermometer was placed in a water bath at 30°C, and 200 ml of nitrobenzene, 70 ml of pyridine, and 1g of copper(I) chloride were added thereto. Oxygen was brought thereinto with vigorously stirring, and 15 g of 2,6-dimethylphenol was added. When the temperature was increased to 33°C, the reaction mixture obtained viscousness. The reaction was further continued for 12 minutes, and thereafter, the reaction mixture was diluted with 100 ml of chloroform and supplied into 1.1 L of methanol containing 3 ml of concentrated hydrochloric acid. The precipitated condensate was filtered off and washed with 250 ml of methanol, 250 ml of methanol containing 10 ml of concentrated hydrochloric acid, and 250 ml of methanol, in this order. The condensate was further dissolved in 500 ml of chloroform, and supplied into 1.2 L of methanol containing 3 ml of concentrated hydrochloric acid to form a precipitate again. The resulting condensate was washed with methanol and then dried under reduced pressure at 110°C for 3 hours. Thus, polyphenylene ether was obtained. The yield of polyphenylene ether was 91% and the average molecular weight thereof was 28000.

Ten grams of the polyphenylene ether was dissolved in 100 ml of chloroform. Then, formalin in 4 times the molar equivalent amount of the aromatic ring in the polyphenylene ether was added thereto under stirring, and concentrated hydrochloric acid was then added dropwise. The mixture was further stirred for 2 hours, and then supplied into large quantities of methanol. This precipitated a solid (polymer) in which the aromatic ring of the polyphenylene ether was chloromethylated.

The solid was filtered off, washed with methanol, and then dried under reduced pressure. The resulting solid was dissolved in chloroform, and caustic soda and acetone in 4 times the molar amount of the aromatic ring in the polymer were added thereto and stirred for 2 hours. The reaction solution was supplied into large quantities of methanol, to obtain a solid having an acetylethyl group introduced in the aromatic ring of the polymer. The solid was filtered off, and then dried under reduced pressure. A 60% hydrazine hydrate in an amount equivalent to the stoichiometrical amount for the above reaction was added to the solid and the mixture was stirred for 3 hours. Subsequently, the mixture was washed with methanol and filtered. The solid thus filtered was dried under reduced pressure, so that a polyether-based hydrazine storage resin was obtained. The content of hydrazine in the methanol filtrate was quantified by iodometry. As a result, the content of fixed hydrazine was 51.5%.

### Example 11 (Polyether-Based Hydrazine Storage Resin-2)

A chloromethylated solid (polymer) was obtained by the same procedures as in Example 10. Thereafter, a 60% hydrazine hydrate in 4 times the molar equivalent amount of the aromatic ring in the polymer was added and stirred for 3 hours. The resulting mixture was then supplied into methanol, to form a precipitate having a hydrazinomethyl group (polyether-based hydrazine storage resin). The content of the precipitate was quantified by iodometry. The result confirmed a hydrazino group in an amount equivalent to 68.6% of the stoichiometrically calculated amount thereof.

### Example 12 (Polyether Ketone-Based Hydrazine Storage Resin)

A1 L-stainless steel reaction tube equipped with a stirrer, a nitrogen introducing tube, and an outlet tube was charged with 125 g of 4, 4' -dichlorobenzophenone, 59.2 g of fine powder of sodium carbonate, 10 g of silica (Aerosil) as a catalyst, 0.27 g of copper (II) chloride, and 300 g of diphenyl sulfone as a solvent.

The reaction system was replaced by nitrogen, and thereafter, the mixture was heated to 200°C. Again, the atmosphere therein was replaced by nitrogen, and stirring was started. The temperature was increased and the reaction was performed at 280°C for 2 hours, at 300°C for 1 hour, and at 320°C for another 2 hours. A small amount of nitrogen was flown downward during condensation. After completion of the reaction, the cooled and solidified condensate was taken out. This solid (condensate) was pulverized with a mixer, and then washed several times with acetone, 4% caustic soda, and water to remove the solvent and the catalyst. When the resulting solid was dried, powder of aromatic polyether ketone was quantitatively obtained.

Ten grams of the powder was dispersed in 100 ml of dimethyl sulfoxide, and pulverized into fine powder having an average particle size of 300 nm with a ultra high pressure collision pulverizer (a jet mizer, manufactured by Sugino Machine Limited). A 60% hydrazine hydrate in a molar equivalent to the carbonyl group in the condensate obtained from the calculated value was added to the dispersion containing these fine powders, and the mixture was stirred at 100 °C a whole day. The condensate was filtered off, washed with acetone and water, and then dried. Thus, a polyether ketone-based hydrazine storage resin was obtained.

Then, a 1 N KOH was added to the polyether ketone-based hydrazine storage resin, and the mixture was stirred at 60°C for 2 hours. Then, as a result of iodometry, free hydrazine was detected in an amount equivalent to 28.9% of the fixed hydrazine.

### Example 13 (Polythioether-Based Hydrazine Storage Resin-1)

An autoclave (internal capacity: 2 L) equipped with a stirrer was charged with 480 g of N-methylpyrrolidone and 2.7 g of sodium sulfide, heated under stirring, and dehydrated until the internal temperature reached 120°C. An amount 79.3 g of a distillate mainly composed of water was distilled off. At this time, 0.069 mol of sodium sulfide was decomposed into hydrogen sulfide and disappeared.

Then, 2.0 mol of p-dichlorobenzene and 150 g of N-methylpyrrolidone were added and stirred over 1 hour while the temperature was increased to 250°C. The reaction was further performed at 250°C for 3 hours, and thereafter, some slurry was sampled and analyzed. The conversion was 100%. An amount 150 g of N-methylpyrrolidone was continuously added, and the mixture was maintained at 250°C under stirring for 15 minutes. Thereafter, the reaction product was cooled to terminate the reaction. The resulting slurry was thoroughly washed with methanol and warm water, then dried at 100°C overnight, to obtain a solid (polyphenylene sulfide). The resulting solid had a particle size of 22 meshes or less.

The polyphenylene sulfide thus obtained was dissolved in dimethyl sulfoxide, formalin in a molar amount equivalent to the molecularity of the aromatic ring contained in the polyphenylene sulfide and hydrochloric acid were added dropwise to perform chloromethylation. The reaction solution was supplied into large quantities of methanol, to obtain a solid. The solid was filtered off, washed with methanol, water, and methanol, and dried under reduced pressure a whole day. The resulting solid was dissolved in dimethyl sulfoxide, and acetone was added in an amount equal to or more than the molar amount of the chloromethyl group. Subsequently, an equimolar amount of aqueous caustic soda solution was added and stirred at 60°C for 5 hours. The reaction solution was then supplied into large quantities of methanol to obtain a solid. The solid was filtered off and thoroughly washed with methanol, water, and methanol. The resulting solid was dried under reduced pressure a whole day. IR and NMR confirmed that the resulting solid was a polymer having an acetylethyl group introduced in the aromatic ring of the polyphenylene sulfide.

This polymer was dissolved in dimethyl sulfoxide, and a 60% hydrazine hydrate in an equimolar amount to the carbonyl group was added and stirred for 10 hours. The separated solid was filtered off, and washed with methanol to obtain a polythioether-based hydrazine storage resin. The content of hydrazine in the methanol filtrate was quantified by iodometry. As a result, the content of fixed hydrazine was 60.3%.

Then, a 1 N KOH was added to the polythioether-based hydrazine storage resin and stirred. Subsequently, iodometry was performed. As a result, free hydrazine was detected in an amount equivalent to 42.9% of the fixed hydrazine.

### Example 14 (Polythioether-Based Hydrazine Storage Resin-2)

A chloromethylated solid was obtained by the same procedures as in Example 13. Thereafter, this solid was dissolved in the dimethyl sulfoxide, and a 60% hydrazine hydrate in an equimolar amount to the chloromethyl group in the solid was added and stirred for 5 hours. The resulting mixture was then supplied into methanol to form a precipitate having a hydrazinomethyl group (polythioether-based hydrazine storage resin). The content of the precipitate was quantified by HPLC. The result confirmed a hydrazino group in an amount equivalent to 58.5% of the stoichiometrically calculated amount thereof.

### Example 15 (Activity Measurement of Fuel-Side Electrode of the Fuel Cell Using Hydrazine as a Fuel Released from the Acrylamide-Based Hydrazine Storage Resin)

### 1) Preparation of Test Solution and Standard Solution

To 2 g of the polyacrylic hydrazide obtained in Example 5 was added 38 g of 1 N KOH to prepare a 5% by weight 1 N aqueous KOH solution of polyacrylic hydrazide. The solution thus prepared was dissolved by heating at 70°C for 30 minutes, and then cooled to room temperature, so that the obtained solution was considered as a test solution.

### 2) Activity Measurement of Fuel-Side Electrode

Using an electrochemical analyzer (manufactured by BAS, Inc.), the activity of the fuel-side electrode was measured by LSV (linear sweep voltammetry) on the following measurement conditions. The results are shown in FIG. 4.

FIG. 4 shows that oxidation current has occurred by using as a fuel the hydrazine liberated from the test solution prepared in step 1) above.
Activity Measurement Conditions:
Test solution: 5% by weight of polyacrylic hydrazide/1 N aqueous KOH solution
Fuel-Side Electrode: Co (cobalt) electrode (manufactured by BAS, Inc.)
Reference Electrode: Ag/AgCl (silver-silver chloride) electrode (manufactured by BAS, Inc.)
Opposite Electrode: Pt (platinum) electrode (manufactured by BAS, Inc.)
Solution Temperature: 30 degrees
Scanning Rage
   Pretreatment: -1.6 -0.6 V
   Blank measurement: -1.6 - 0 V
   Activity measurement: -1.6 - 0 V
Scanning Rate
   Pretreatment: 0.1 V/s
   Blank measurement: 0.02 V/s
   Activity measurement: 0.02 V/s

Bubbling with Ar (argon) gas was performed before each measurement.

While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

As described above, the hydrazine supply device and the hydrazine supply method according to the present invention are suitably used in industrial fields requiring supply of hydrazine for various applications such as raw materials for the production of plastic foaming agents, boiler compounds, reducing agents, polymerization catalysts and various derivatives, reagents, agricultural chemicals, water treatment chemicals, and rocket fuels. Further, the fuel cell system of the present invention including the hydrazine supply device of the present invention, and the vehicle carrying the fuel cell system are suitably used in fuel cell systems and vehicles provided with fuel cells using hydrazine as a fuel.

## Claims

1. A hydrazine supply device comprising:
a fixing bath for fixing hydrazine; and a releasing unit for releasing the hydrazine fixed in the fixing bath,
**characterised in that** the fixing bath comprises a polymer having a hydrazine-fixing group that
releasably fixes hydrazine.

2. The hydrazine supply device according to claim 1, further comprising a material supply unit for supplying hydrazine to the fixing bath.

3. The hydrazine supply device according to claim 1, wherein the fixing bath comprises a polymer having a hydrazine-releasable group capable of releasing hydrazine.

4. A fuel cell system comprising:
a hydrazine supply device according to claim 1; and
a fuel cell using hydrazine supplied from the hydrazine supply device as a fuel.

5. The fuel cell system according to claim 4, which is mountable on a vehicle.

6. A vehicle being mounted with the fuel cell system as defined in claim 5.

7. A hydrazine supply method using a hydrazine supply device according to any one of claims 1 to 3, comprising the steps of:
a fixation step for fixing hydrazine; and
a supply step for releasing the hydrazine fixed in the fixation step and then supplying the hydrazine.

8. The hydrazine supply method according to claim 6, further comprising a material supply step for supplying hydrazine for fixation.

## Patentansprüche

1. Hydrazin-Zuführvorrichtung, umfassend:
ein Fixierbad zum Fixieren von Hydrazin; und eine Freisetzungseinheit zum Freisetzen des Hydrazins, welches in dem Fixierbad fixiert wird,
**dadurch gekennzeichnet, dass** das Fixierbad ein Polymer mit einer Hydrazinfixierenden Gruppe, die Hydrazin freisetzbar fixiert, umfasst.

2. Hydrazin-Zuführvorrichtung gemäß Anspruch 1, ferner umfassend eine Materialzuführeinheit zum Zuführen von Hydrazin zu dem Fixierbad.

3. Hydrazin-Zuführvorrichtung gemäß Anspruch 1, wobei das Fixierbad ein Polymer mit einer Hydrazin-freisetzbaren Gruppe, welche zum Freisetzen von Hydrazin in der Lage ist, umfasst.

4. Brennstoffzellensystem, umfassend:
eine Hydrazin-Zuführvorrichtung gemäß Anspruch 1; und
eine Brennstoffzelle, welche Hydrazin verwendet, das von der Hydrazin-Zuführvorrichtung als Brennstoff zugeführt wird.

5. Brennstoffzellensystem gemäß Anspruch 4, welches an einem Fahrzeug befestigt werden kann.

6. Fahrzeug, an welchem das Brennstoffzellensystem wie in Anspruch 5 definiert befestigt ist.

7. Hydrazin-Zuführverfahren, welches eine Hydrazin-Zuführvorrichtung gemäß einem der Ansprüche 1 bis 3 verwendet, umfassend die Schritte:
Fixierungsschritt zum Fixieren von Hydrazin; und
Zuführschritt zum Freisetzen des Hydrazins, welches in dem Fixierungsschritt fixiert wird, und dann Zuführen des Hydrazins.

8. Hydrazin-Zuführverfahren gemäß Anspruch 6, ferner umfassend einen Materialzu-führschritt zum Zuführen von Hydrazin zur Fixierung.

## Revendications

1. Dispositif d'alimentation en hydrazine comportant :
un bain fixateur pour fixer l'hydrazine, et une unité de libération pour libérer l'hydrazine fixée dans le bain fixateur,
**caractérisé en ce que** le bain fixateur comporte un polymère ayant un groupe fixateur d'hydrazine qui fixe l'hydrazine de manière libérable.

2. Dispositif d'alimentation en hydrazine selon la revendication 1, comportant en outre une unité d'alimentation en matière pour alimenter le bain fixateur en hydrazine.

3. Dispositif d'alimentation en hydrazine selon la revendication 1, dans lequel le bain fixateur comporte un polymère ayant un groupe libérable d'hydrazine capable de libérer l'hydrazine.

4. Système de pile à combustible comportant :
un dispositif d'alimentation en hydrazine selon la revendication 1, et
une pile à combustible utilisant l'hydrazine délivrée par le dispositif d'alimentation en hydrazine comme combustible.

5. Système de pile à combustible selon la revendication 4, qui peut être monté sur un véhicule.

6. véhicule étant équipé du système de pile à combustible tel que défini dans la revendication 5.

7. Procédé d'alimentation en hydrazine utilisant un dispositif d'alimentation en hydrazine selon l'une quelconque des revendications 1 à 3, comportant les étapes suivantes :
une étape de fixation pour fixer l'hydrazine, et
une étape d'alimentation pour libérer l'hydrazine fixée à l'étape de fixation, et délivrer ensuite l'hydrazine.

8. Procédé d'alimentation en hydrazine selon la revendication 6, comportant en outre une étape d'alimentation en matière pour délivrer l'hydrazine en vue de la fixation.
